(19) Europäisches Patentamt
European Patent Office
Office européen des brevets

(11) EP 4 286 418 A1

(12) EUROPEAN PATENT APPLICATION
published in accordance with Art. 153(4) EPC

(43) Date of publication:
06.12.2023 Bulletin 2023/49

(21) Application number: 22745275.2

(22) Date of filing: 26.01.2022

(51) International Patent Classification (IPC):
*C08F 2/01* (2006.01) *C08F 4/646* (2006.01)
*C08F 210/16* (2006.01)

(52) Cooperative Patent Classification (CPC):
C08F 2/01; C08F 4/646; C08F 210/16

(86) International application number:
PCT/CN2022/074017

(87) International publication number:
WO 2022/161402 (04.08.2022 Gazette 2022/31)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 01.02.2021 CN 202110135415
01.02.2021 CN 202110135426
01.02.2021 CN 202110135239

(71) Applicants:
- China Petroleum & Chemical Corporation
Beijing 100728 (CN)
- Sinopec Yangzi Petrochemical Company Ltd.
Nanjing, Jiangsu 210048 (CN)

(72) Inventors:
- LI, Chuanfeng
Nanjing, Jiangsu 210048 (CN)
- WANG, Wenrui
Nanjing, Jiangsu 210048 (CN)
- JING, Kun
Nanjing, Jiangsu 210048 (CN)
- XING, Yuejun
Nanjing, Jiangsu 210048 (CN)
- XIA, Huimin
Nanjing, Jiangsu 210048 (CN)
- CHEN, Minghua
Nanjing, Jiangsu 210048 (CN)
- YOU, Zhonglin
Nanjing, Jiangsu 210048 (CN)
- CHEN, Shaohui
Nanjing, Jiangsu 210048 (CN)
- ZHAI, Jianhong
Nanjing, Jiangsu 210048 (CN)
- GUO, Feng
Nanjing, Jiangsu 210048 (CN)
- YANG, Liu
Nanjing, Jiangsu 210048 (CN)
- MEI, Li
Nanjing, Jiangsu 210048 (CN)

(74) Representative: Hoffmann Eitle
Patent- und Rechtsanwälte PartmbB
Arabellastraße 30
81925 München (DE)

# (54) ETHYLENE POLYMER AND PREPARATION METHOD THEREFOR

(57) The present invention relates to an ethylene polymer and a process for preparing the same, wherein the ethylene polymer has an average particle size of 50-3000 μm, a bulk density of 0.28-0.55 g/cm$^3$, a true density of 0.930-0.980 g/cm$^3$, a melt index at a load of 2.16Kg at 190°C of 0.01-2500 g/lOmin, a crystallinity of 30-90%, a melting point of 105-147°C, a comonomer molar insertion rate of 0.01-5 mol%, a weight-average molecular weight of 2 $\times 10^4$ g/mol - 40 $\times 10^4$ g/mol, and a molecular weight distribution of 1.8-10. In the preparation process, raw materials containing ethylene, hydrogen gas and a comonomer are subjected to a tank-type slurry polymerization with an alkane solvent having a boiling point of 5-55°C or a mixed alkane solvent having a saturated vapor pressure of 20-150KPa at 20°C as the polymerization solvent in the presence of a polyethylene catalytic system, at the molar ratio of hydrogen gas to ethylene of 0.01-20:1, preferably 0.015-10:1, at the molar ratio of hydrogen gas to the comonomer of 0.1-30:1, preferably 0.15-25:1 to prepare the ethylene polymer.

EP 4 286 418 A1

## Description

### Technical Field

The present invention relates to a high-density ethylene polymer and an ethylene slurry polymerization preparation process for preparing the ethylene polymer. Specifically, the present invention relates to a high-density ethylene copolymer, and a process for preparing an ethylene copolymer through the tank-type slurry polymerization of raw materials contain ethylene, hydrogen gas and a comonomer by using an alkane solvent having a boiling point of 5-55°C or a mixed alkane solvent having a saturated vapor pressure of 20-150KPa at 20°C as the polymerization solvent, in the presence of a polyethylene catalytic system, under an ethylene slurry polymerization condition.

### Background technology

The polyethylene production process mainly includes high-pressure polymerization, gas-phase polymerization, slurry polymerization, solution polymerization, and other technologies and processes. Among them, ethylene slurry polymerization process is one of the main processes for producing polyethylene. This process is divided into a loop reactor polymerization process and a stirred tank slurry polymerization process.

In the absence of comonomers, ethylene homopolymerization can produce medium and high-density polyethylene, such as ultra-high molecular weight polyethylene, ultra-high molecular weight polyethylene, polyethylene wax, etc. In the presence of comonomers such as propylene, 1-butene, 1-hexene, and 1-octene, ethylene copolymerizes with comonomers to obtain medium-density and high-density polyethylene (ethylene copolymer) with excellent toughness. As the insertion rate of comonomer units in the copolymer increases, the density of the ethylene copolymer gradually decreases, and under the same molar insertion rate of comonomer units, the longer the carbon chain of the comonomer, the more significantly the density of the ethylene copolymer decreases.

Previous research has shown that in general, under comparable conditions, such as the same catalytic system and similar polymerization manner, the longer the chain segment of the comonomer, the better the performance of the ethylene copolymer product. For example, the performance of the copolymer of ethylene and 1-octene is better than that of the copolymer of ethylene and 1-hexene, the performance of the copolymer of ethylene and 1-hexene is better than that of the copolymer of ethylene and 1-butene, and the performance of the copolymer of ethylene and 1-butene is better than that of the copolymer of ethylene and propylene. However, in the existing ethylene stirred tank slurry polymerization technologies or polymerization processes, e.g. the ethylene slurry polymerization CX technology from Mitsui Chemicals and the Hostalen technology from LyondellBasell, hexane is used as the polymerization solvent. In this case, when 1-hexene is used as the comonomer, due to the similar boiling points of hexane and 1-hexene (with a difference of less than 2°C), their separation is difficult. Therefore, the ethylene stirred tank slurry polymerization technology or polymerization process using hexane as the solvent is not suitable for the case where 1-hexene is used as the polymerization comonomer, which greatly limits the development of the stirred tank slurry polymerization technology and high-performance products obtained by using 1-hexene as the comonomer.

On the other hand, when solvents with boiling points higher than hexane, such as n-heptane, iso-heptane, or their isomeric solvents are used in the ethylene slurry polymerization, due to the higher boiling point in the polymerization, the energy consumption for gasification and condensation is relatively high, and it is not suitable for the polymerization to remove the heat with the gas phase circulation condensation used in the existing industrial production plants. Moreover, the polymer powder obtained after filtering or centrifugal separation has a relatively high solvent content, and therefore the costs for the polymerization production and the drying in the post-treatment are relatively high.

In addition, the existing ethylene slurry polymerization process has a relatively low polymerization pressure, and the presence of the partial pressures of hydrogen gas and comonomer leads to the lower partial pressure of ethylene. In addition, when producing an ethylene polymer with a high melt index and a low density, the activity of the polyethylene main catalyst is low, the catalyst consumption is relatively high, and the production cost is high.

Therefore, in the existing technologies, there is still great room for improving the preparation of high-density ethylene polymers (ethylene copolymers) with the tank-type ethylene slurry polymerization process and the high-density ethylene polymers prepared therefrom.

### Summary of the Invention

On the basis of the existing technology and through extensive experiments, analysis, and in-depth research, the present inventors creatively discovered that the existing polyethylene catalytic system can be applied under an ethylene slurry polymerization condition by using an alkane solvent having a boiling point of 5-55°C or a mixed alkane solvent having a saturated vapor pressure of 20-150KPa at 20°C as the polymerization solvent, and the comonomers widely used in the existing industrial production and application such as propylene, 1-butene, 1-hexene, and 1-octene

can be used as the comonomer, and thereby the above-mentioned problems in the prior art are effectively solved and the present invention is completed.

Furthermore, in the present invention, by using an alkane solvent having a low boiling point or a mixed alkane solvent having a high saturated vapor pressure as the polymerization solvent, and an ethylene slurry polymerization process with controlling a certain proportion of hydrogen gas and the comonomer, high-density ethylene copolymers with excellent performance can be prepared without the need for the harsh polymerization reactor configuration and polymerization reaction condition, while the ethylene polymer performance can be adjusted in a large range and the production mode is flexible. Therefore, the process of the present invention is very suitable for the industrial production.

Specifically, the present invention provides a high-density ethylene polymer, which has an average particle size of 50-3000 $\mu$m, preferably 100-1000 $\mu$m, a weight-average molecular weight of $2 \times 10^4$ g/mol - $40 \times 10^4$ g/mol, preferably $5 \times 10^4$ g/mol - $30 \times 10^4$ g/mol, a molecular weight distribution of 1.8-10, preferably 2.0-8.0, a comonomer molar insertion rate of 0.01-5 mol%, preferably 0.05-2.5 mol%, preferably, a melt index at a load of 2.16Kg at 190°C of 0.01-2500 g/10min, preferably 0.1-2000 g/10min, more preferably 0.1-1000 g/10min, a bulk density of 0.28-0.55 g/cm$^3$, preferably 0.32-0.50 g/cm$^3$, a true density of 0.930-0.980 g/cm$^3$, preferably 0.940-0.970 g/cm$^3$, more preferably 0.942-0.970 g/cm$^3$, a crystallinity of 30-90%, preferably 40-80%, a melting point of 105-147°C, preferably 110-143°C, and a processing index in the film-blowing test of 4.0-6.0, preferably 4.5-5.9, more preferably 5.0-5.8.

The present invention also provides a process for preparing an ethylene polymer, wherein raw materials containing ethylene, hydrogen gas and a comonomer are subjected to a tank-type slurry polymerization with an alkane solvent having a boiling point of 5-55°C or a mixed alkane solvent having a saturated vapor pressure of 20-150KPa at 20°C as the polymerization solvent in the presence of a polyethylene catalytic system, at the molar ratio of hydrogen gas to ethylene of 0.01-20:1, preferably 0.015-10:1, and at the molar ratio of hydrogen gas to the comonomer of 0.1-30:1, preferably 0.15-25:1, more preferably 0.2-23:1.

**Technical effect**

The present invention provides a high-density ethylene polymer (ethylene copolymer). Its bulk density and its true density are high; its melt index, its crystallinity, its melting point, its comonomer molar insertion rate, its weight-average molecular weight and the like have wide ranges and are adjustable and controllable; its molecular weight distribution has a moderate range and is adjustable and controllable; and it has a good subsequent processability and is very suitable for the production and application in the tank-type ethylene slurry polymerization process.

Through the process for preparing the ethylene polymer of the present invention, in the slurry polymerization preparation process, raw materials containing ethylene, hydrogen gas and a comonomer are subjected to a slurry polymerization with an alkane solvent having a boiling point of 5-55°C or a mixed alkane solvent having a saturated vapor pressure of 20-150KPa at 20°C as the polymerization solvent to produce the ethylene polymer (polyethylene, ethylene copolymer). In the separation stage of the obtained polymer material after the polymerization reaction, it is easier to separate the solvent from the comonomer such as propylene, 1-butene, 1-hexene, and 1-octene. Therefore, high-density ethylene polymers (ethylene copolymers) with different properties can be more efficiently produced with this polymerization process. Moreover, due to using a specific polymerization solvent, oligomers produced along with the polymerization reaction remain in the obtained ethylene polymer, resulting in that the obtained ethylene polymer has an excellent subsequent processability.

By using the ethylene slurry polymerization process of the present invention, it is very easy to dry the ethylene polymer powder obtained after the completion of the polymerization. After the polymerization reaction is completed, the product is directly filtered, the residual solvent content in the wet polymer is less than 20wt%, which is lower than the residual solvent content of higher than 25wt% in the wet polymer obtained according to the existing technology by using hexane as the polymerization solvent, which is very conducive to shortening the drying time of the polyethylene material, and saving the cost of the polyethylene post-treatment, which in return facilitates the subsequent industrial application of the ethylene polymer.

In the process of the present invention, by setting the proportion of hydrogen gas and ethylene to a specific range, an appropriate amount of oligomer is also generated while ethylene and the comonomer are polymerized. Moreover, due to the use of a specific polymerization solvent, the oligomer generated during the polymerization reaction can remain in the ethylene polymer, resulting in excellent processing performance of the obtained ethylene polymer.

Moreover, in the polymerization process of the present invention, only an alkane solvent having a boiling point of 5-55°C or a mixed alkane solvent having a saturated vapor pressure of 20-150KPa at 20°C is used as the polymerization solvent without the need of using other solvents such as dispersants and diluents, resulting in a simplex reaction system and a simple and easy post-treatment.

## Detailed description

Reference will now be made in detail to the present embodiments of the present invention, but it should be understood that the scope of the invention is not limited by the embodiments, but is defined by the appended claims.

In the context of this specification, except for what is explicitly stated, any item or matter not mentioned is directly applicable to those known in the art without any changes. Moreover, any of the embodiments described herein can be freely combined with one or more other embodiments described herein, and the resulting technical solutions or technical ideas are regarded as part of the original disclosure or the original record of the present invention, and should not be regarded as new content that has not been disclosed or anticipated in this specification, unless those skilled in the art believe that the combination is obviously unreasonable.

In the context of the present invention, unless otherwise clearly defined or beyond the understanding of those skilled in the art, the hydrocarbons or hydrocarbon-derived groups having three or more carbon atoms (such as propyl, propyloxy, butyl, butane, butene, butenyl, and hexane) that are not prefixed with "n-" have the same meanings as those prefixed with "n-". For example, propyl is generally understood as n-propyl, while butyl is generally understood as n-butyl.

In the context of the present invention, unless otherwise specifically defined, the physical properties of substances (such as boiling point) are measured at normal temperature (25°C) and normal pressure (101325 Pa).

In the present invention, the ethylene polymer is a copolymer of ethylene and other comonomer(s), sometimes referred to as polyethylene.

The inventors of the present invention have conducted in-depth research and confirmed that in the polymerization process of the present invention, by using an alkane solvent having a boiling point of 5-55°C or a mixed alkane solvent having a saturated vapor pressure of 20-150KPa at 20°C as the polymerization solvent, compared with the previous polymerization solvents, the specific polymerization solvent of the present invention and ethylene and olefins for copolymerization (e.g. propylene, 1-butene, 1-hexene, 1-octene) as the reactant have significant different boiling points, therefore the post-treatment of the obtained ethylene polymer may be conveniently and efficiently performed, and the residual solvent content in the obtained ethylene polymer powder is low, which is very conducive to shortening the drying time of the polyethylene material, saving the cost of the post-treatment of the ethylene polymer powder.

By using the slurry polymerization process of the ethylene polymer of the present invention, it is very easy to dry the ethylene polymer powder obtained after the completion of the polymerization. After the polymerization reaction is completed, the product is directly filtered, the residual solvent content in the wet polymer is less than 20wt%, which is lower than the residual solvent content of higher than 25wt% in the wet polymer obtained according to the existing technology by using hexane as the polymerization solvent, which is very conducive to shortening the drying time of the polyethylene material and saving the cost of the polyethylene post-treatment, which in return facilitates the subsequent industrial application of the ethylene polymer. In addition, due to the use of a specific polymerization solvent, the oligomer generated during the polymerization reaction can remain in the ethylene polymer, resulting in excellent processing performance of the obtained ethylene polymer.

In addition, by using the slurry polymerization process of the ethylene polymer of the present invention, under other similar conditions of ethylene slurry homopolymerization except for the absence of comonomers participating in the polymerization reaction, the copolymerization process of ethylene and the comonomer exhibits a more remarkable polymerization activity effect than the ethylene homopolymerization process, that is, the copolymerization activity is higher than the homopolymerization activity. Therefore, the comonomer molar insertion rate can be improved.

Therefore, the present invention can provide an ethylene polymer. Its bulk density and its true density are high; its melt index, its crystallinity, its melting point, its weight-average molecular weight and the like have wide ranges and are adjustable and controllable; its molecular weight distribution has a moderate range and is adjustable and controllable. The present invention is very suitable for the customized preparation to produce the ethylene polymer. Moreover, the obtained ethylene polymer has excellent processing performance.

The present inventors surprisingly found that in the ethylene slurry polymerization process, by using an alkane solvent having a boiling point of 5-55°C or a mixed alkane solvent having a saturated vapor pressure of 20-150KPa at 20°C as the polymerization solvent, setting the proportion of hydrogen gas and ethylene to a specific range, and setting the proportion of hydrogen gas and the comonomer to a specific range, the obtained ethylene polymer shows an excellent processing performance when used for the subsequent processing and use.

Without wishing to be bound by any theory, the inventors of the present invention speculate that because in the polymerization process of the present invention, although the copolymerization reaction between ethylene and the comonomer is the main reaction, however by adjusting the proportion of hydrogen gas and ethylene to a specific range and adjusting the proportion of hydrogen gas and the comonomer to a specific range, oligomers of the specific copolymerization type can be produced during the polymerization reaction. Moreover, in the specific polymerization solvent of the present invention, the solubility of the oligomer is very low, which allows the oligomer in the obtained ethylene polymer to be retained. This oligomer with a moderate residue content is conducive to improving the processing performance of products, reducing the processing cost, and improving the processing and shaping efficiency, when used in the subsequent processing of the ethylene polymer (e.g. The extrusion of pipes and profiles, film-blowing, casting, mold-blowing, roll-molding, coating, wire-drawing, the pressing of sheets and profiles).

More specifically, the present invention provides a high-density ethylene polymer, which has an average particle size of 50-3000 μm, preferably 100-1000 μm. The high-density ethylene polymer of the present invention has a weight-average molecular weight of 2 $\times 10^4$ g/mol - 40 $\times 10^4$ g/mol, preferably 5 $\times 10^4$ g/mol - 30 $\times 10^4$ g/mol. The high-density ethylene polymer of the present invention has a molecular weight distribution of 1.8-10, preferably 2.0-8.0. The high-density ethylene polymer of the present invention has a comonomer molar insertion rate of 0.05-5 mol%, preferably 0.1-2.5 mol%. The high-density ethylene polymer of the present invention has a processing index in the film-blowing test of 4.0-6.0, preferably 4.5-5.9, further more preferably 5.0-5.8.

In one embodiment of the present invention, the ethylene polymer has a melt index at a load of 2.16Kg at 190°C of 0.01-2500 g/10min, preferably 0.1-2000 g/10min, more preferably 0.1-1000 g/10min. The high-density ethylene polymer of the present invention has a bulk density of 0.28-0.55 g/cm$^3$, preferably 0.32-0.50 g/cm$^3$. The high-density ethylene polymer of the present invention has a true density of 0.930-0.980 g/cm$^3$, preferably 0.940-0.970 g/cm$^3$, more preferably 0.942-0.970 g/cm$^3$. The high-density ethylene polymer of the present invention has a crystallinity of 30-90%, preferably 40-80%. The high-density ethylene polymer of the present invention has a melting point of 105-147°C, preferably 110-143°C.

The present invention also provides a process for preparing an ethylene polymer, wherein raw materials containing ethylene, hydrogen gas and a comonomer are subjected to a tank-type slurry polymerization with an alkane solvent having a boiling point of 5-55°C or a mixed alkane solvent having a saturated vapor pressure of 20-150KPa at 20°C as the polymerization solvent in the presence of a polyethylene catalytic system, at the molar ratio of hydrogen gas to ethylene of 0.01-20:1, preferably 0.015-10:1, at the molar ratio of hydrogen gas to the comonomer of 0.1-30:1, preferably 0.15-25:1, more preferably 0.2-23:1. The polyethylene catalytic system comprises a polyethylene main catalyst selected from at least one of non-metallocene catalysts, metallocene catalysts, and Ziegler-type catalysts.

In one embodiment of the present invention, in the process for preparing the ethylene polymer, the proportion of the polyethylene main catalyst and the polymerization solvent is 0.001-0.500 mmol of the polyethylene main catalyst/L of the polymerization solvent, preferably 0.005-0.200 mmol of the polyethylene main catalyst/L of the polymerization solvent, more preferably 0.005-0.05 mmol of the polyethylene main catalyst/L of the polymerization solvent.

In the process for preparing an ethylene polymer of the present invention, the tank-type slurry polymerization of ethylene is performed in batch or continuously to produce an ethylene polymer under the condition that the polymerization temperature is 30-110°C, preferably 50-100°C; the polymerization pressure is 0.2-4.0 MPa, preferably 1.0-3.8 MPa; the molar ratio of hydrogen gas to ethylene is 0.01-20:1, preferably 0.015-10:1, the molar ratio of hydrogen gas to the comonomer is 0.1-30:1, preferably 0.15-25:1; and the slurry slurry concentration is 50-500 g of the polymer/L of the polymerization solvent, preferably 100-400 g of the polymer/L of the polymerization solvent.

In the process for preparing an ethylene polymer of the present invention, the solvent content in the powder material obtained after flash evaporation, filtering, or centrifugal separation of the slurry for which the polymerization reaction is completed is less than 20wt%.

Below, a specific explanation will be provided for the process for preparing an ethylene polymer of the present invention.

Specifically, the explanation of polymerization solvents is as follows.

According to the present invention, as the alkane solvent having a boiling point of 5-55°C, for example, 2,2-dimethylpropane (also known as neopentane, having a boiling point of 9.5°C, and a saturated vapor pressure at 20°C of 146.63 KPa), 2-methylbutane (also known as isopentane, having a boiling point 27.83°C, and a saturated vapor pressure at 20°C of 76.7 KPa), n-pentane (having a boiling point of 36.1°C, and a saturated vapor pressure at 20°C of 56.5 KPa), cyclopentane (having a boiling point of 49.26°C, and a saturated vapor pressure at 20°C of 34.6 KPa), preferably an alkane solvent having a boiling point of 25-50°C can be enumerated.

As a mixed alkane having a saturated vapor pressure of 20-150 KPa at 20°C, preferably a mixed alkane having a saturated vapor pressure at 20°C of 40-110KPa, it is a mixed solvent formed by mixing different alkane solvents according to a certain ratio, for example, a mixed solvent formed from hexane and an isomer thereof and from pentane and an isomer solvent, or an alkane mixture obtained by cutting according to the distillation range from a solvent distillation unit. Preferably it is a mixed solvent of pentane and an isomer thereof. Specifically, a combination of n-pentane and isopentane, a combination of isopentane and neopentane, a combination of n-pentane and cyclopentane, a combination of n-pentane and neopentane, a combination of isopentane and cyclopentane, a combination of neopentane and cyclopentane, a combination of n-hexane and cyclopentane, a combination of n-hexane and n-pentane, a combination of n-pentane-isopentane-cyclopentane, a combination of n-pentane-n-hexane-isopentane, or the like can be enumerated, but not limited thereto, as long as it is a mixed alkane having a saturated vapor pressure at 20°C of 20-150KPa (preferably 40-110KPa).

In one embodiment of the present invention, as the mixed alkane having a saturated vapor pressure at 20°C of 20-150KPa (preferably 40-110KPa), it is preferably a mixed alkane having a saturated vapor pressure at 20°C of

20-150KPa (preferably 40-110KPa) formed by mixing two or more alkanes selected from n-pentane, isopentane, neopentane and cyclopentane, more preferably a combination of n-pentane and isopentane, a combination of isopentane and neopentane, a combination of n-pentane and cyclopentane, a combination of isopentane and cyclopentane, a combination of neopentane and cyclopentane, a combination of n-pentane-isopentane-cyclopentane, a combination of neopentane-isopentane-n-pentane and the like. For the proportion of each alkane in the mixed alkane, for example, when two alkane solvents are mixed, their molar ratio can be 0.01-100: 1, preferably 0.1-10: 1, and when three alkane solvents are mixed, their molar ratio can be 0.01-100:0.01-100: 1, preferably 0.1-10:0.1-10:1, as long as the obtained mixed alkane solvent has a saturated vapor pressure at 20°C of 20-150 KPa (preferably 40-110 KPa). In one embodiment of the present invention, only an alkane solvent having a boiling point of 5-55°C or a mixed alkane solvent having a saturated vapor pressure of 20-150KPa at 20°C is used as the polymerization solvent.

The explanation of the polyethylene catalytic system is as follows.

In the present invention, the polyethylene catalytic system contains a polyethylene main catalyst selected from at least one of non-metallocene catalysts, metallocene catalysts, and Ziegler-type catalysts.

In an embodiment of the present invention, the polyethylene catalytic system of the present invention can be a catalytic system comprising a polyethylene main catalyst and a cocatalyst.

As the polyethylene main catalyst, a supported catalyst commonly used in the art for catalyzing the ethylene polymerization, for example, non-metallocene catalysts, metallocene catalysts, Ziegler-Natta catalysts, or their composites with each other can be used. Specifically, those having the activity for catalyzing the ethylene polymerization, including a supported single-center metal catalyst, a supported multiple-active center metal catalyst, a Ziegler-Natta type catalyst, a supported Ziegler-Natta and metallocene composite catalyst, a supported bis- or multiple- metallocene catalyst, a supported Ziegler-Natta and non-metallocene composite catalyst, a supported bis- or multiple-non-metallocene catalyst, a supported metallocene and non-metallocene composite catalyst, a supported organic chromium-based catalyst, a supported inorganic chromium-based catalyst, a mixed organic chromium/chromic oxide catalyst, a supported post-transition metal catalyst, a supported Ziegler-Natta type catalyst and the like can be enumerated.

Specifically, the polyethylene main catalyst can be selected from supported non-metallocene catalysts, for example the supported non-metallocene catalysts involved in the following invention patents: CN200310106156.X, CN200310106157.4, CN200410066068.6, CN200510119401.X, CN200610107651.6, CN200710162677.5, CN200710162667.1, CN200710162672.2, CN200710162675.6, CN200710162676.0, CN200710162666.7, CN200910180100.6, CN200910180607.1, CN200910180601.4, CN200910180606.7, CN200910180602.9, CN200910180605.2, CN200910180603.3, CN200910180604.8, CN200910210988.3, CN200910210984.5, CN200910210989.8, CN200910210986.4, CN200910210985.X, CN200910210990.0, CN200910210987.9, CN200910210991.5, CN201010286008.0, CN201010286012.7, CN201010284870.8, CN201010285982.5, CN201010284856.8, CN201010285970.2, CN201010285956.2, CN201010285969.X, CN201010285958.1, CN201010285967.0, CN201010285994.8, CN201110259336.6, CN201110259219.X, CN201110259330.9, CN201110259327.7, CN201110259367.1, CN201110259289.5, CN201110259359.7, CN201110259282.3, CN201110259318.8, CN201110259258.X, CN201110259300.8, CN201110259254.1, CN001110259299.9, CN201110259245.2, CN201110259296.5, CN201110259338.5, CN201110259370.3, CN201110259339.X, CN201110259293.1, CN201110259356.3, CN201210063756.1, CN201210063777.3, CN201210063788.1, CN201210063818.9, CN201210063824.4, CN201210063843.7, CN201210063854.5, CN201210063876.1, CN201210063878.0, CN201210063891.6, CN201210063894.X, CN201210063907.3, CN201210063909.2, CN201210063935.5, CN201210063941.0, CN201210063945.9, CN201310189677.X, CN201310227368.7, CN201310227370.4, CN201310227830.3, CN201310227393.5, CN201310452714.1, CN201710814678.7, CN201710814595.8, CN201710814594.3, CN201710814593.9, CN201710814592.4, CN201710814591.X, CN201811144599.0, CN201811144768.0, CN201811139936.7, CN201811140811.6, CN201811139946.0, CN201811139741.2, and CN201310091208.4.

According to the present invention, the term "non-metallocene complex", as opposed to metallocene catalysts, refers to a single center olefin polymerization catalyst that does not contain cyclopentadienyl groups or their derivatives such as cyclopentadiene ring, fluorene ring, indene rings, and the like in its structure, and is a metal organic compound that can exhibit the olefin polymerization catalytic activity when combined with a cocatalyst (such as those described below) (therefore, the non-metallocene complexe is sometimes referred to as the non-metallocene olefin polymerization-like complex). The compound contains a center metal atom and at least one multidentate ligand (preferably a tridentate ligand or a polydentate (higher than tridentate) ligand) bound by a coordination bond with the center metal atom, and the term "non-metallocene ligand" is the above-mentioned multidentate ligand.

According to the present invention, the non-metallocene complex is selected from a compound with the following chemical structural formula:

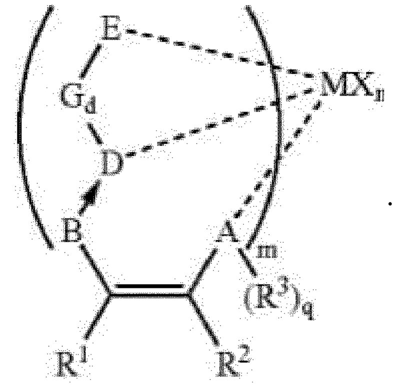

According to this chemical structural formula, the ligand that forms a coordination bond with the center metal atom M includes n groups X and m multidentate ligands (the structural formula in the parenthesis). According to the chemical structural formula of the multidentate ligand, groups A, D, and E (coordination groups) form coordination bonds with the center metal atom M through the coordination atoms contained in these groups (heteroatoms such as N, O, S, Se, and P).

According to the present invention, the absolute value of the total negative charge carried by all ligands (including the groups X and the multidentate ligands) is identical to the absolute value of the positive charge carried by the central metal atom M.

In a more specific embodiment, the non-metallocene complex is selected from compounds (A) and (B) with the following chemical structural formulae.

| | | |
|---|---|---|
| 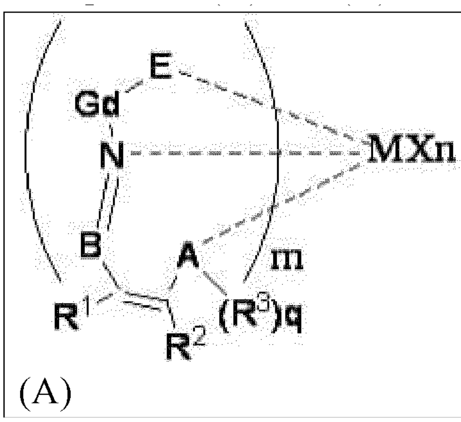 | and | 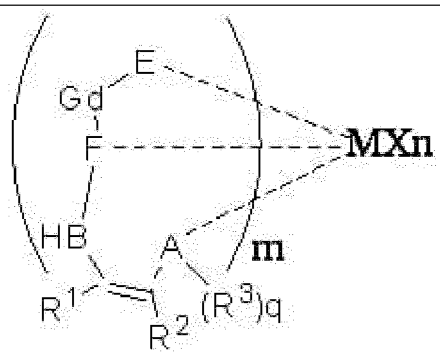 |
| (A) | | (B). |

In a more specific embodiment, the non-metallocene complex is selected from compound (A-1) to compound (A-4) and compound (B-1) to compound (B-4) with the following chemical structural formulae: in all the above chemical structural formulae, q is 0 or 1; d is 0 or 1; m is 1, 2 or 3; M is the center metal atom selected from metal atoms of Group III To Group XI in the Periodic Table of Elements, preferably metal atoms of Group IV. For example,

| | |
|---|---|
| 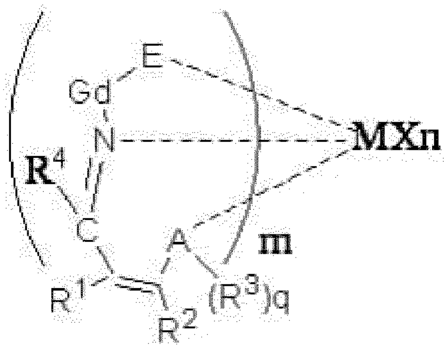 , (A-1) | 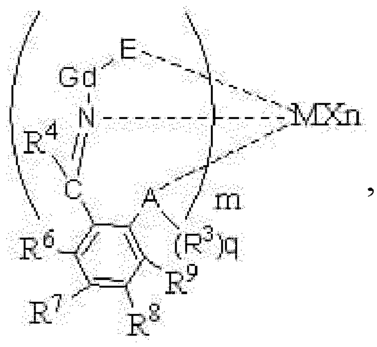 , (A-2) |
| 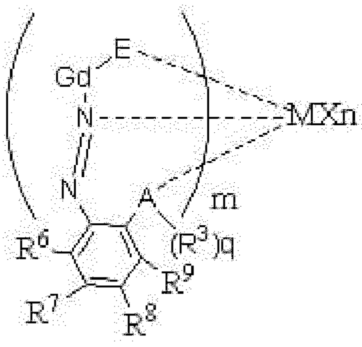 , (A-3) | 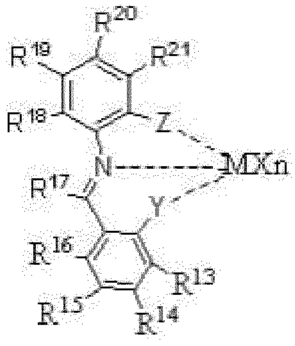 , (A-4) |
| 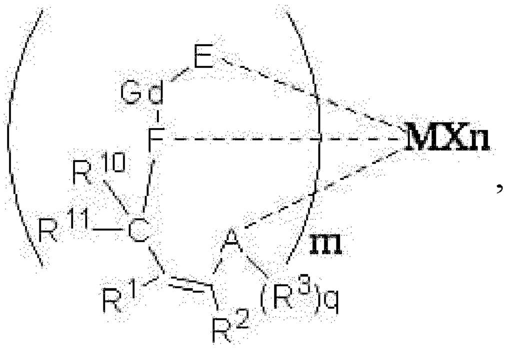 , (B-1) | 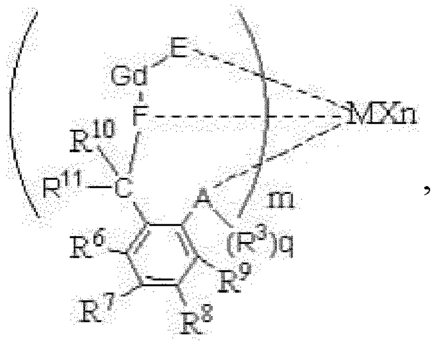 , (B-2) |
| 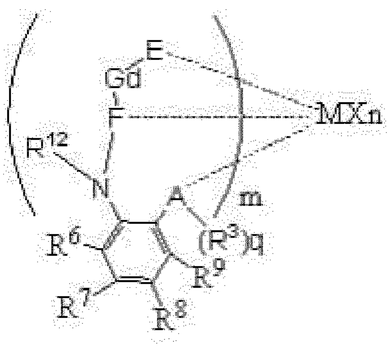 and (B-3) | 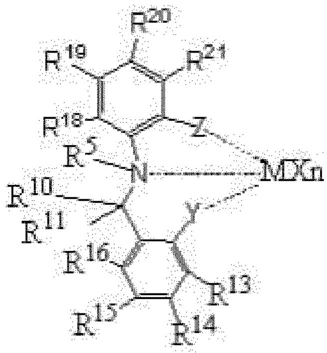 (B-4). |

Ti (IV), Zr (IV), Hf (IV), Cr (III), Fe (III), Ni (II), Pd (II) or Co (II), can be enumerated. n is 1, 2, 3 or 4, depending on the valence state of the central metal atom M; X is selected from a halogen atom, a hydrogen atom, a $C_1$-$C_{30}$ hydrocabon group, a substituted $C_1$-$C_{30}$ hydrocabon group, an oxygen-containing group, a nitrogen-containing group, a sulfur-containing group, a boron-containing group, an aluminum-containing group, a phosphorus-containing group, a silicon-containing group, a germanium-containing group or a stannum-containing group, a plurality of Xs can be identical or different, and can also form a bond or a ring with each other; A is selected from an oxygen atom, a sulphur atom, a selenium atom,

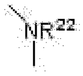,

$-NR^{23}R^{24}$, $-N(O)R^{25}R^{26}$,

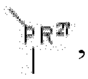,

$-PR^{28}R^{29}$, $-P(O)R^{30}OR^{31}$, sulfonyl, sulfinyl or $-Se(O)R^{39}$, wherein N, O, S, Se, and P are each coordination atoms; B is selected from a nitrogen atom, a nitrogen-containing group, a phosphorus-containing group or a $C_1$-$C_{30}$ hydrocabon group; D is selected from a nitrogen atom, an oxygen atom, a sulphur atom, a selenium atom, a phosphorus atom, a nitrogen-containing group, a phosphorus-containing group, a $C_1$-$C_{30}$ hydrocabon group, sulfonyl or sulfinyl, wherein N, O, S, Se, and P are each coordination atoms; E is selected from a nitrogen-containing group, an oxygen-containing group, a sulfur-containing group, a selenium-containing group, a phosphorus-containing group or cyano (-CN), wherein N, O, S, Se, and P are each coordination atoms; F is selected from a nitrogen atom, a nitrogen-containing group, an oxygen atom, a sulphur atom, a selenium atom, a phosphorus atom or a phosphorus-containing group, wherein N, O, S, Se, and P are each coordination atoms; G is selected from a $C_1$-$C_{30}$ hydrocabon group, a substituted $C_1$-$C_{30}$ hydrocabon group or an inert functional group; Y is selected from an oxygen atom, a nitrogen-containing group, an oxygen-containing group, a sulfur-containing group, a selenium-containing group or a phosphorus-containing group, wherein N, O, S, Se, and P are each coordination atoms; Z is selected from a nitrogen-containing group, an oxygen-containing group, a sulfur-containing group, a selenium-containing group, a phosphorus-containing group or cyano (-CN),for example, $-NR^{23}R^{24}$, $-N(O)R^{25}R^{26}$, $-PR^{28}R^{29}$, $-P(O)R^{30}R^{31}$, $-OR^{34}$, $-SR^{35}$, $-S(O)R^{36}$, $-SeR^{38}$ or $-Se(O)R^{39}$ can be enumerated, wherein N, O, S, Se, and P are each coordination atoms; $\rightarrow$ represents a single bond or a double bond;-represents a covalent bond or an ionic bond; --- represents a coordination bond, a covalent bond or an ionic bond.

$R^1$ to $R^4$ and $R^6$ to $R^{21}$ are each independently selected from hydrogen, a $C_1$-$C_{30}$ hydrocabon group, a substituted $C_1$-$C_{30}$ hydrocabon group (wherein preferably a halohydrocabon group, for example $-CH_2Cl$ and $-CH_2CH_2Cl$) or an inert functional group. $R^{22}$ to $R^{36}$, $R^{38}$ and $R^{39}$ are each independently selected from hydrogen, a $C_1$-$C_{30}$ hydrocabon group or a substituted $C_1$-$C_{30}$ hydrocabon group (wherein preferably a halohydrocabon group, for example $-CH_2Cl$ and $-CH_2CH_2Cl$). The above-mentioned groups can be identical to or different from each other, wherein adjacent groups for example $R^1$ and $R^2$, $R^6$ and $R^7$, $R^7$ and $R^8$, $R^8$ and $R^9$, $R^{13}$ and $R^{14}$, $R^{14}$ and $R^{15}$, $R^{15}$ and $R^{16}$, $R^{18}$ and $R^{19}$, $R^{19}$ and $R^{20}$, $R^{20}$ and $R^{21}$, $R^{23}$ and $R^{24}$, $R^{25}$ and $R^{26}$, or the like can bind to each other to form a bond or to form a ring, preferably form an aromatic ring, for example an unsubstituted benzene ring or a benzene ring substituted by 1-4 substituents selected from a $C_1$-$C_{30}$ hydrocabon group or a substituted $C_1$-$C_{30}$ hydrocabon group (wherein preferably a halohydrocabon group, for example $-CH_2Cl$ and $-CH_2CH_2Cl$), and $R^5$ is selected from a lone pair of electrons on the nitrogen, a hydrogen atom, a $C_1$-$C_{30}$ hydrocabon group, a substituted $C_1$-$C_{30}$ hydrocabon group, an oxygen-containing group, a sulfur-containing group, a nitrogen-containing group, a selenium-containing group or a phosphorus-containing group. When $R^5$ is an oxygen-containing group, a sulfur-containing group, a nitrogen-containing group, a selenium-containing group or a phosphorus-containing group, N, O, S, P and Se in $R^5$ can serve as coordination atoms (coordinating with the center metal atom M).

In the context of the present invention, said $R^{22}$ to $R^{36}$, $R^{38}$ and $R^{39}$ are each independently selected from hydrogen, a $C_1$-$C_{30}$ hydrocabon group or a substituted $C_1$-$C_{30}$ hydrocabon group, the above-mentioned groups can be identical to or different from each other, wherein adjacent groups can bind to each other to form a bond or to form a ring, preferably form an aromatic ring.

In the context of the present invention, said inert functional group that for example can be enumerated is selected from at least one of halogen, an oxygen-containing group, a nitrogen-containing group, a silicon-containing group, a germanium-containing group, a sulfur-containing group, a stannum-containing group, a $C_1$-$C_{10}$ ester group, nitro ($-NO_2$), or the like, but usually excluding a $C_1$-$C_{30}$ hydrocabon group and a substituted $C_1$-$C_{30}$ hydrocabon group.

In the context of the present invention, due to the limitation by the chemical structure of the multidentate ligand, the inert functional group has the following characteristics: (1) Not interfering with the coordination process between the group A, D, E, F, Y, or Z and the center metal atom M, and (2) The coordination ability with the center metal atom M being lower than that of the groups A, D, E, F, Y, and Z, and not replacing the existing coordination between these

groups and the center metal atom M.

According to the present invention, in all the aforementioned chemical structural formulae, depending on the specific situations, any adjacent two or more groups, such as $R^{21}$ and group Z, or $R^{13}$ and group Y, can combine with each other to form a ring, preferably to form a $C_6$-$C_{30}$ aromatic heterocycle containing a heteroatom from the group Z or Y, e.g. a pyridine ring and the like, wherein the aromatic heterocycle is optionally substituted by one or more substituents selected from a $C_1$-$C_{30}$ hydrocarbon group and a substituted $C_1$-$C_{30}$ hydrocarbon group.

In the context of the present invention, said halogen is selected from F, Cl, Br or I. Said nitrogen-containing group is selected from

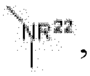,

$-NR^{23}R^{24}$, $-T-NR^{23}R^{24}$ or $-N(O)R^{25}R^{26}$. Said phosphorus-containing group is selected from

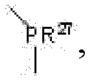,

$-PR^{28}R^{29}$, $-P(O)R^{30}R^{31}$ or $-P(O)R^{32}(OR^{33})$. Said oxygen-containing group is selected from hydroxy, $-OR^{34}$ and $-T-OR^{34}$. Said sulfur-containing group is selected from $-SR^{35}$, $-T-SR^{35}$, $-S(O)R^{36}$ or $-T-SO_2R^{37}$. Said selenium-containing group is selected from $-SeR^{38}$, $-T-SeR^{38}$, $-Se(O)R^{39}$ or $-T-Se(O)R^{39}$. Said group T is selected from a $C_1$-$C_{30}$ hydrocabon group or a substituted $C_1$-$C_{30}$ hydrocabon group. Said $R^{37}$ is selected from hydrogen, a $C_1$-$C_{30}$ hydrocabon group or a substituted $C_1$-$C_{30}$ hydrocabon group.

In the context of the present invention, said $C_1$-$C_{30}$ hydrocabon group is selected from $C_1$-$C_{30}$ alkyl (preferably $C_1$-$C_6$ alkyl, for example isobutyl), $C_7$-$C_{50}$ alkylaryl (for example tolyl, dimethylphenyl, diisobutylphenyl or the like), $C_7$-$C_{50}$ arylalkyl (for example benzyl), $C_3$-$C_{30}$ cyclic alkyl group, $C_2$-$C_{30}$ alkenyl, $C_2$-$C_{30}$ alkynyl, $C_6$-$C_{30}$ aryl (for example phenyl, naphthyl, anthracyl or the like), $C_8$-$C_{30}$ fused ring group or $C_4$-$C_{30}$ heterocyclic group, wherein said heterocyclic group contains 1-3 heteroatoms selected from a nitrogen atom, an oxygen atom or a sulphur atom, for example pyridyl, pyrrolyl, furyl, thienyl or the like.

According to the present invention, in the context of the present invention, said $C_1$-$C_{30}$ hydrocarbon group sometimes refers to the $C_1$-$C_{30}$ hydrocarbon diyl (divalent group, or referred to as the $C_1$-$C_{30}$ hydrocarbylene group) or $C_1$-$C_{30}$ hydrocarbon triyl (trivalent group), depending on the specific situation of the related group it is combined with, which is obvious to those skilled in the art.

In the context of the present invention, the substituted $C_1$-$C_{30}$ hydrocabon group refers to a $C_1$-$C_{30}$ hydrocarbon group with one or more inert substituents. The so-called inert substituent refers to those substituents that do not substantially interfere with the coordination process between the aforementioned coordination groups (referring to groups A, D, E, F, Y, and Z, or optionally including group $R^5$) and the center metal atom M; in other words, due to the limitation by the chemical structure of the multidentate ligand described in the present invention, these substituents have no ability or opportunity (e.g. being affected by steric hindrance) to undergo a coordination reaction with the center metal atom M to form a coordination bond. Generally speaking, the inert substituent is selected from halogen or $C_1$-$C_{30}$ alkyl (preferably $C_1$-$C_6$ alkyl, such as isobutyl).

In the context of the present invention, said boron-containing group is selected from $BF_4^-$, $(C_6F_5)_4B^-$ or $(R^{40}BAr_3)^-$; said aluminum-containing group is selected from alkyl aluminum, $AlPh_4^-$, $AlF_4^-$, $AlCl_4^-$, $AlBr_4^-$, $AlI_4^-$ or $R^{41}AlAr_3^-$; said silicon-containing group is selected from $-SiR^{42}R^{43}R^{44}$ or $-T-SiR^{45}$; said germanium-containing group is selected from $-GeR^{46}R^{47}R^{48}$ or $-T-GeR^{49}$; said stannum-containing group is selected from $-SnR^{50}R^{51}R^{52}$, $-T-SnR^{53}$ or $-T-Sn(O)R^{54}$, wherein Ar represents $C_6$-$C_{30}$ aryl. $R^{40}$ to $R^{54}$ are each independently selected from hydrogen, the above-mentioned $C_1$-$C_{30}$ hydrocarbon group, or the above-mentioned substituted $C_1$-$C_{30}$ hydrocarbon group. The above-mentioned groups can be identical to or different from each other, wherein adjacent groups can be combined together with each other to form a bond or to form a ring, wherein, group T is defined as before.

As the non-metallocene complex, for example, the following compounds can be enumerated:

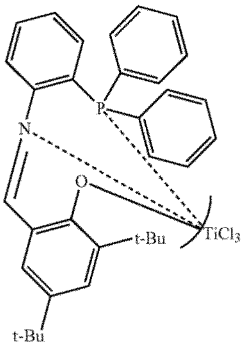,
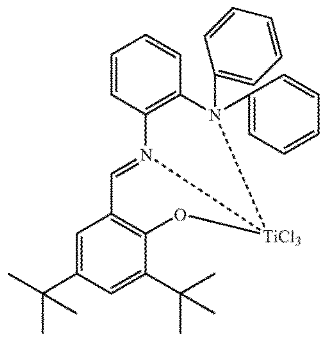,
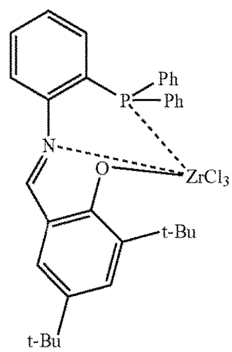,

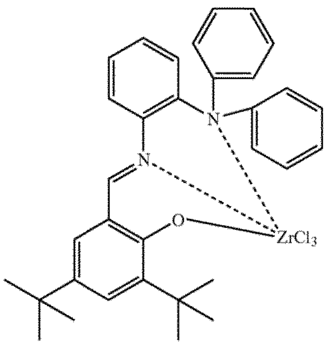,
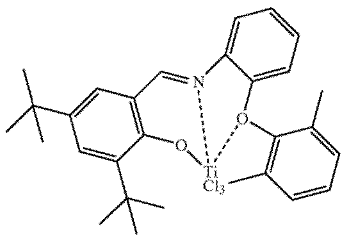,
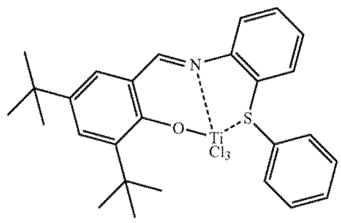,

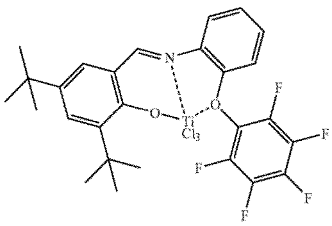,
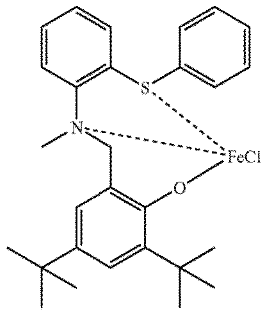,
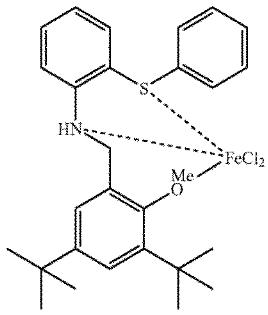,

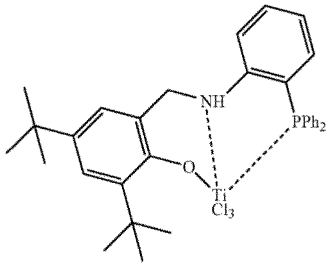,
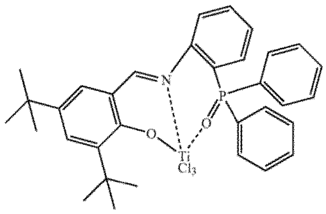,
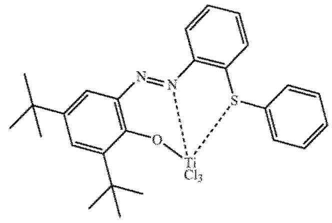,

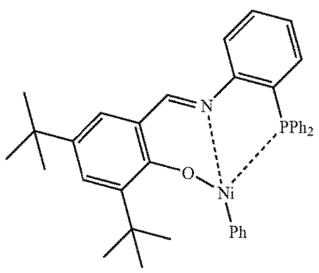,
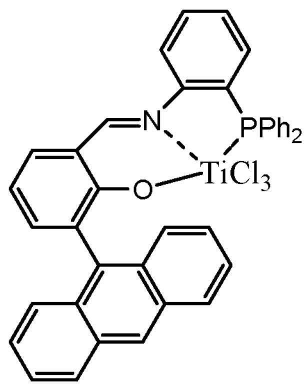,
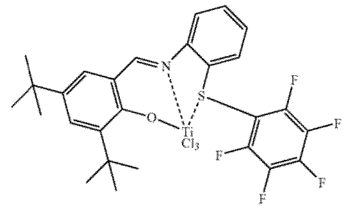,

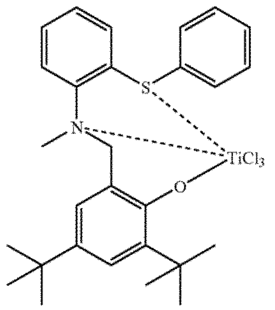,
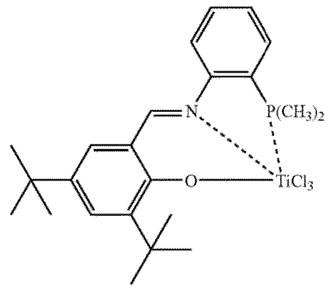,
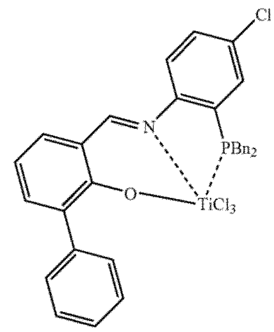,

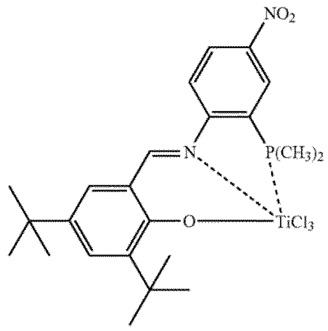,
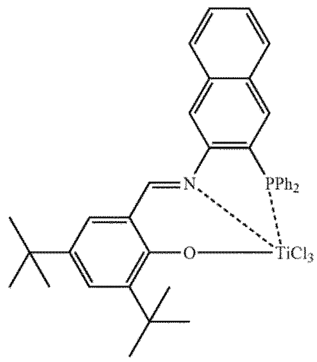,
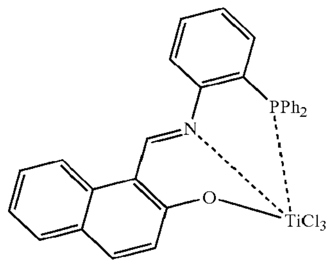,

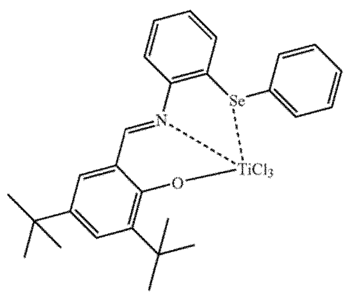,
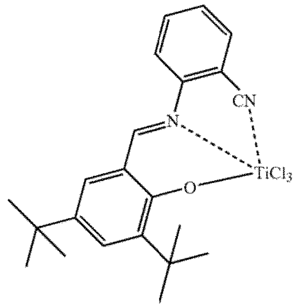,
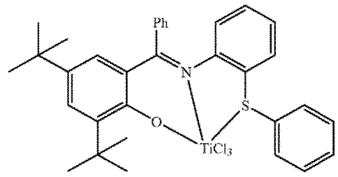,

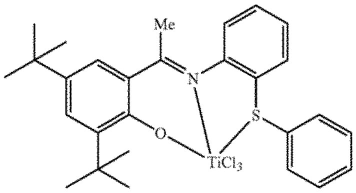,
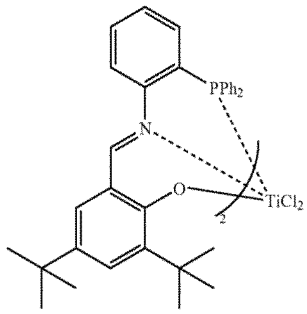,
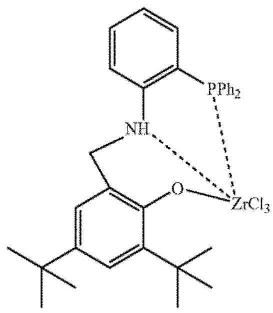,
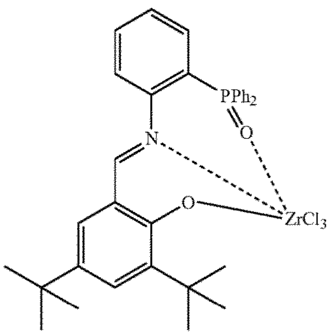,
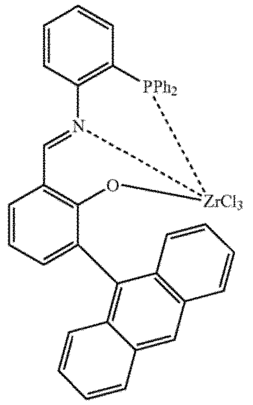,
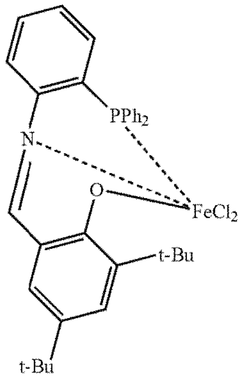,
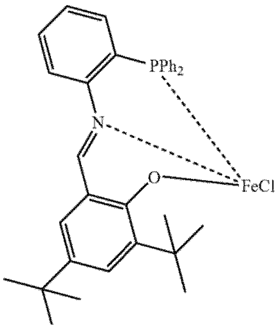,
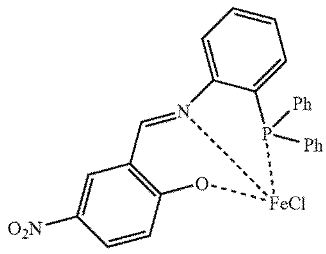,
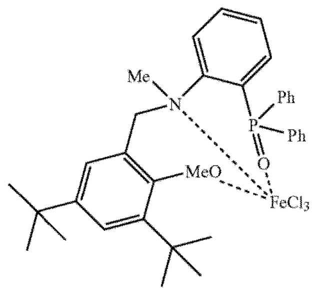,
.
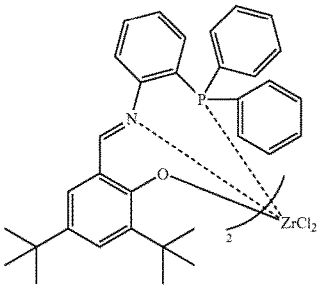
and
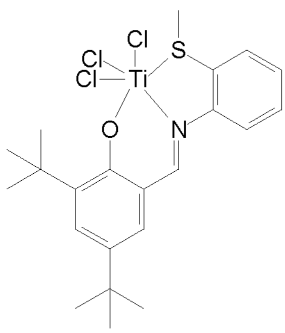
.

The non-metallocene complex is preferably selected from the following compounds:

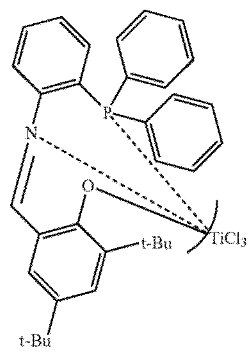, 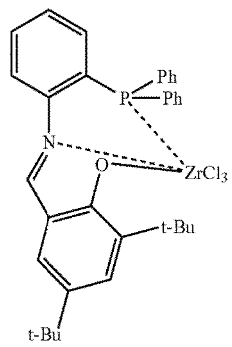, 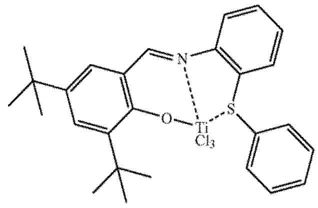,

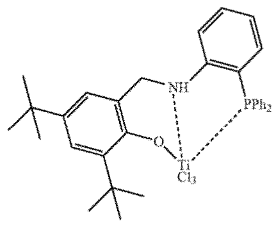, 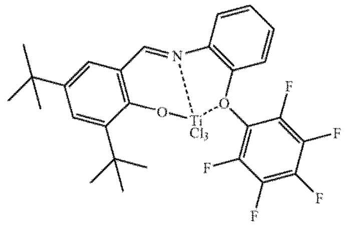, 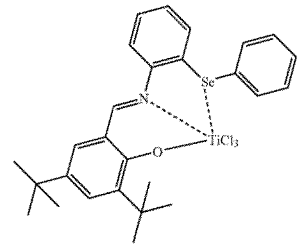,

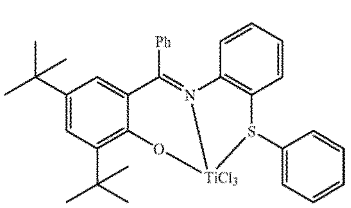, 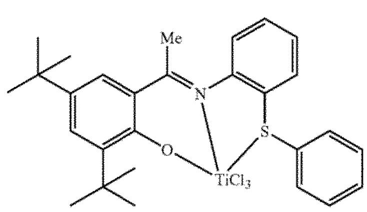, and 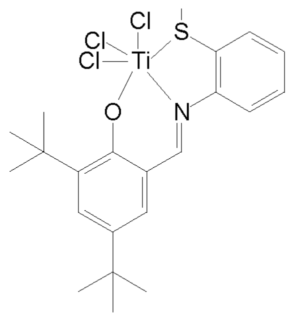.

The non-metallocene complex is further preferably selected from the following compounds:

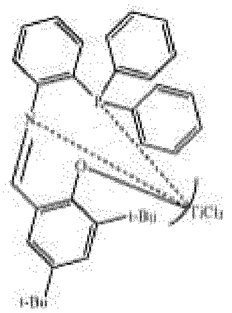, 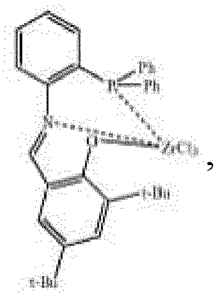, 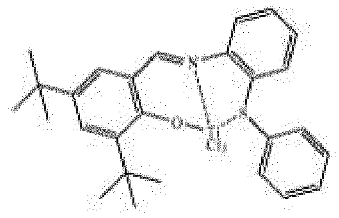,

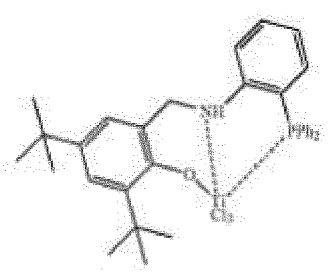, 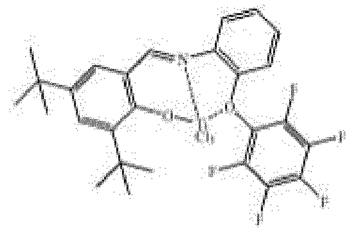, and 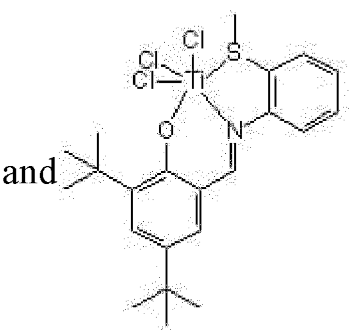.

The non-metallocene complex is more preferably selected from the following compounds:

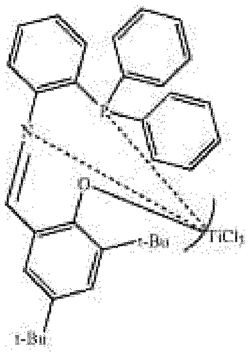 and 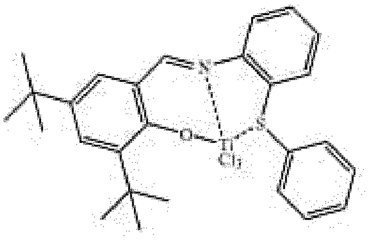 .

These non-metallocene complexes can be used alone or in combination at any proportion.

According to the present invention, the multidentate ligand in the non-metallocene complex is not a diethyl compound conventionally used as an electron donor compound in the art.

The non-metallocene complex or the multidentate ligand can be prepared according to any process known to those skilled in the art. For specific contents of the preparation process, see, for example, WO03/010207 and Chinese patents ZL01126323.7 and ZL02110844.7, and the like, which are incorporated herein by reference in their entirety.

Among them, a supported non-metallocene catalyst is preferable, and a supported single component non-metallocene catalyst is more preferable.

As the polyethylene main catalyst, it can be selected from supported metallocene catalysts, as long as it is a catalyst containing a metallocene catalyst. It can be a single component metallocene catalyst or a composite catalyst of a metallocene catalyst and at least one other catalyst. Specifically, the supported Ziegler-Natta and metallocene composite catalyst, the supported bis- or multiple- metallocene catalyst and the like can be enumerated.

More specifically, the polyethylene main catalyst may be selected from supported metallocene catalysts, for example, supported metallocene catalysts involved in the invention patents CN201110247347.2, CN201110080343.X, CN201010518904.5, CN201010519660.2, CN201210289014.0, CN200910078596.6, CN201310090758.4, CN201310090736.8, 201310521768.9, CN201410589467.4, CN201410590067.5, CN201610835700.1, 201610944191.6, CN201710959423.X, CN201110247349.1, CN201110080294.X, CN201110080395.7, CN201210289017.4, CN201210289031.4, CN201310091192.7, CN201310540973.X, CN201510724626.1, CN200410086283.2, CN200610137777.8, CN201610944182.7, CN201710312720.5, CN201110080422.0, CN201110080422.0, CN201110080394.2, CN201010519406.2, CN201010519715.X, CN201010519174.0, CN201010519429.3, CN201210289004.7, CN201310090847.9, CN201310091209.9, CN201310540975.9, CN201410554709.6, CN201410513506.2, CN00130388.0, CN200710176589.0, CN201610944083.9, CN201110246705.8, CN201110247085.X, CN2011102914899, CN201010521674.8, CN201310090752.7, CN201310090848.3, CN2013100908483, CN201510624502.6, CN201710166709.2, CN20171031225.2, CN201110246710.9, CN201110080374.5, CN201010519797.8, CN201210289012.1, CN201210418645.8, CN201310090998.4, CN201410252254.2, CN201610393399.3, CN201610956141.X, CN201710958837.0 and the like, the 101 and 201-type supported metallocene catalysts of Grace Davison Company, and the XCAT-type metallocene catalyst of Univation Company.

Among them, a supported metallocene catalyst is preferable, and a supported single component metallocene catalyst is more preferable.

Among them, the structures of metallocene ligand and metallocene complex in metallocene catalysts can be selected from homogeneous dicyclopentadiene structure, mixed dicyclopentadiene structure, chiral metallocene structure, single/double/multiple bridged structure, monocyclopentadiene structure, monocyclopentadiene or dicyclopentadiene structure with a limited geometrical configuration, bridged mixed cyclopentadiene structure, cationic structure and the like.

The polyethylene main catalyst can be selected from supported Zeigler-Natta type catalysts, as long as it is a catalyst containing a Zeigler-Natta type catalyst, it can be a single component Zeigler-Natta type catalyst or a composite catalyst of a Zeigler-Natta type catalyst and at least one other catalyst. Specifically, a Zeigler-Natta type catalyst, a supported Zeigler-Natta and metallocene composite catalyst, a supported Zeigler-Natta and non-metallocene composite catalyst, a supported Zeigler-Natta type catalyst and the like can be enumerated.

More specifically, the polyethylene main catalyst can be selected from supported Zeigler-Natta type catalysts, for example Zeigler-Natta type catalysts involved in invention patents CN201010522112.5, CN201010240355.X, CN201010502803.9, CN201010511310.1, CN200710121105.2, CN201010502778.4, CN201010502717.8,

CN201010240379.5, CN201110148492.5, CN201110148493.X, CN201110148527.5, CN201110148545.3, CN201110306102.2, CN201010240378.0, CN200410086382.0, CN98101108.X, CN200410078280.4, CN200910088546.6 and the like, e.g., the existing BCH-, BCE-, BCG-, and BCS-Series catalysts and the like of Beijing Auda Division of Sinopec Catalyst Co., Ltd.; SCG Series catalyst of Shanghai Leader Catalyst Co., Ltd.; TH Series catalyst of Zibo Xinsu Chemical Co., Ltd.; M and J Type catalysts of Univation Corporation; XY-H and XY-S Type catalysts of Liaoning Yingkou; and the like.

Among them, a supported Ziegler-Nata type catalyst is preferable, and a supported single component Zeigler-Natta type catalyst is more preferable. For example, BCH-, BCE-, BCG-, and BCS-Series catalysts and the like of Beijing Auda Division of Sinopec Catalyst Co., Ltd., SCG Series catalyst of Shanghai Leader Catalyst Co., Ltd., TH Series catalyst of Zibo Xinsu Chemical Co., Ltd., XY-H Type catalyst of Yingkou Xiangyang Catalyst Co., Ltd., and the like, all of which are commercially available from the current market.

The active metal in the polyethylene main catalyst can be an active metal commonly used in the art, for example can be selected from Group IVB elements, such as titanium, zirconium or hafnium; Group VB elements, such as vanadium, Group VIII elements, such as iron, cobalt, nickel, and palladium, preferably Group IVB metal elements, most preferably titanium metal element.

Among them, supported non-metallocene catalysts, supported metallocene catalysts, and Zeigler-Natta type catalysts are preferable.

The polyethylene main catalyst includes, but is not limited to, non-metallocene catalysts, metallocene catalysts, and Zeigler-Natta type catalysts, typically coordinated with an active metal; said active metal can be an active metal commonly used in the art, and for example can be selected from Group IVB elements, such as titanium, zirconium or hafnium; Group VB elements, such as vanadium, Group VIIB elements, such as chromium; Group VIII elements, such as iron, cobalt, nickel, and palladium, preferably Group IVB metal elements, most preferably titanium metal element.

According to the present invention, the polyethylene main catalyst can be a supported catalyst, and the support can be selected from porous silica gel support, layered porous support, organic polymer support, magnesium compound support, oxide support, and the like.

Among them, the magnesium compound support for example can be selected from magnesium compounds. For example, magnesium halide, alkoxy magnesium halide, alkoxy magnesium, alkyl magnesium, alkyl magnesium halide and alkyl alkoxy magnesium can be enumerated.

Specifically, as magnesium halide, for example, magnesium chloride ($MgCl_2$), magnesium bromide ($MgBr_2$), magnesium iodide ($MgI_2$) and magnesium fluoride ($MgF_2$) can be enumerated, preferably magnesium chloride.

As alkoxy magnesium halide, for example, methyloxy magnesium chloride ($Mg(OCH_3)Cl$), ethyloxy magnesium chloride ($Mg(OC_2H_5)Cl$), propyloxy magnesium chloride ($Mg(OC_3H_7)Cl$), n-butyloxy magnesium chloride ($Mg(OC_4H_9)Cl$), iso-butyloxy magnesium chloride ($Mg(i\text{-}OC_4H_9)Cl$), methyloxy magnesium bromide ($Mg(OCH_3)Br$), ethyloxy magnesium bromide ($Mg(OC_2H_5)Br$), propyloxy magnesium bromide ($Mg(OC_3H_7)Br$), n-butyloxy magnesium bromide ($Mg(OC_4H_9)Br$), iso-butyloxy magnesium bromide ($Mg(i\text{-}OC_4H_9)Br$), methyloxy magnesium iodide ($Mg(OCH_3)I$), ethyloxy magnesium iodide ($Mg(OC_2H_5)I$), propyloxy magnesium iodide ($Mg(OC_3H_7)I$), n-butyloxy magnesium iodide ($Mg(OC_4H_9)I$), iso-butyloxy magnesium iodide ($Mg(i\text{-}OC_4H_9)I$) and the like can be enumerated, wherein methyloxy magnesium chloride, ethyloxy magnesium chloride and iso-butyloxy magnesium chloride are preferable.

As alkoxy magnesium, for example, methyloxy magnesium ($Mg(OCH_3)_2$), ethyloxy magnesium ($Mg(OC_2H_5)_2$), propyloxy magnesium ($Mg(OC_3H_7)_2$), butyloxy magnesium ($Mg(OC_4H_9)_2$), iso-butyloxy magnesium ($Mg(i\text{-}OC_4H_9)_2$), 2-ethyl hexyloxy magnesium ($Mg(OCH_2CH(C_2H_5)C_4H_8)_2$) and the like can be enumerated, wherein ethyloxy magnesium and iso-butyloxy magnesium are preferable.

As alkyl magnesium, for example, methyl magnesium ($Mg(CH_3)_2$), ethyl magnesium ($Mg(C_2H_5)_2$), propyl magnesium ($Mg(C_3H_7)_2$), n-butyl magnesium ($Mg(C_4H_9)_2$), iso-butyl magnesium ($Mg(i\text{-}C_4H_9)_2$) and the like can be enumerated, wherein ethyl magnesium and n-butyl magnesium are preferable.

As alkyl magnesium halide, for example, methyl magnesium chloride ($Mg(CH_3)Cl$), ethyl magnesium chloride ($Mg(C_2H_5)Cl$), propyl magnesium chloride ($Mg(C_3H_7)Cl$), n-butyl magnesium chloride ($Mg(C_4H_9)Cl$), iso-butyl magnesium chloride ($Mg(i\text{-}C_4H_9)Cl$), methyl magnesium bromide ($Mg(CH_3)Br$), ethyl magnesium bromide ($Mg(C_2H_5)Br$), propyl magnesium bromide ($Mg(C_3H_7)Br$), n-butyl magnesium bromide ($Mg(C_4H_9)Br$), iso-butyl magnesium bromide ($Mg(i\text{-}C_4H_9)Br$), methyl magnesium iodide ($Mg(CH_3)I$), ethyl magnesium iodide ($Mg(C_2H_5)I$), propyl magnesium iodide ($Mg(C_3H_7)I$), n-butyl magnesium iodide ($Mg(C_4H_9)I$), and iso-butyl magnesium iodide ($Mg(i\text{-}C_4H_9)I$) and the like can be enumerated, wherein methyl magnesium chloride, ethyl magnesium chloride and iso-butyl magnesium chloride are preferable.

As alkyl alkoxy magnesium, for example, methyl methyloxy magnesium ($Mg(OCH_3)(CH_3)$), methyl ethyloxy magnesium ($Mg(OC_2H_5)(CH_3)$), methyl propyloxy magnesium ($Mg(OC_3H_7)(CH_3)$), methyl n-butyloxy magnesium ($Mg(OC_4H_9)(CH_3)$), methyl iso-butyloxy magnesium ($Mg(i\text{-}OC_4H_9)(CH_3)$), ethyl methyloxy magnesium ($Mg(OCH_3)(C_2H_5)$), ethyl ethyloxy magnesium ($Mg(OC_2H_5)(C_2H_5)$), ethyl propyloxy magnesium ($Mg(OC_3H_7)(C_2H_5)$), ethyl n-butyloxy magnesium ($Mg(OC_4H_9)(C_2H_5)$), ethyl iso-butyloxy magnesium ($Mg(i\text{-}OC_4H_9)(C_2H_5)$), propyl methyloxy

magnesium ($Mg(OCH_3)(C_3H_7)$), propyl ethyloxy magnesium ($Mg(OC_2H_5)(C_3H_7)$), propyl propyloxy magnesium ($Mg(OC_3H_7)(C_3H_7)$), propyl n-butyloxy magnesium ($Mg(OC_4H_9)(C_3H_7)$), propyl iso-butyloxy magnesium ($Mg(i-OC_4H_9)(C_3H_7)$), n-butyl methyloxy magnesium ($Mg(OCH_3)(C_4H_9)$), n-butyl ethyloxy magnesium ($Mg(OC_2H_5)(C_4H_9)$), n-butyl propyloxy magnesium ($Mg(OC_3H_7)(C_4H_9)$), n-butyl n-butyloxy magnesium ($Mg(OC_4H_9)(C_4H_9)$), n-butyl iso-butyloxy magnesium ($Mg(i-OC_4H_9)(C_4H_9)$), iso-butyl methyloxy magnesium ($Mg(OCH_3)(i-C_4H_9)$), iso-butyl ethyloxy magnesium ($Mg(OC_2H_5)(i-C_4H_9)$), iso-butyl propyloxy magnesium ($Mg(OC_3H_7)(i-C_4H_9)$), iso-butyl n-butyloxy magnesium ($Mg(OC_4H_9)(i-C_4H_9)$), iso-butyl iso-butyloxy magnesium ($Mg(i-OC_4H_9)(i-C_4H_9)$) and the like can be enumerated, wherein butyl ethyloxy magnesium is preferable.

These magnesium compounds can be used alone or in combination.

As porous supports, for example those organic or inorganic porous solids conventionally used as the support in the preparation of a supported olefin polymerization catalyst in the art can be enumerated.

Specifically, as organic porous solids, for example, olefin homopolymer or copolymer, polyvinyl alcohol or copolymer thereof, cyclodextrin, (co)polyester, (co)polyamide, vinyl chloride homopolymer or copolymer, acrylate homopolymer or copolymer, methacrylate homopolymer or copolymer, styrene homopolymer or copolymer and the like, and a partially crosslinked form of these homopolymers or copolymers can be enumerated, wherein a partially crosslinked styrene polymer (for example having a crosslinking degree of at least 2% but less than 100%) is are preferable.

According to the present invention, when using an organic porous solid as support, the organic porous solid can also be thermally activated before use. The thermal activation treatment can be carried out in the usual way, e.g. heating the organic porous solid under reduced pressure or inert atmosphere. The inert atmosphere herein means that the gas contains only a very small amount of the component that can be reacted with said organic porous solid or is free of the component that can be reacted with said organic porous solid. As said inert atmosphere, for example, nitrogen gas atmosphere or noble gas atmosphere can be enumerated, wherein nitrogen gas atmosphere is preferable. Since the organic porous solid has poor heat resistance, the thermal activation process should be carried out based on a prerequisite that it does not damage the structure and basic composition of the organic porous solid itself. Generally, the thermal activation temperature is 50-400°C, preferably 100-250°C, and the thermal activation time is 1-24 hours, preferably 2-12 hours. After the thermal activation treatment, the organic porous solid needs to be kept under a positive pressure in an inert atmosphere for later use.

As inorganic porous solid, for example, refractory oxides of Group IIA, IIIA, IVA, or IVB metal of the periodic table of elements (for example silica (also known as silicon oxide or silica gel), alumina, magnesia, titania, zirconia, thoria, or the like), or any refractory composite oxide of these metals (for example silica-alumina, magnesia-alumina, titania-silica, titania-magnesia and titania-alumina, and the like), and clay, molecular sieve (for example ZSM-5 and MCM-41), mica, montmorillonite, bentonite, diatomite and the like can be enumerated. As said inorganic porous solid, an oxide formed by the pyrohydrolysis of a gaseous metal halide or a gaseous silicon compound, for example silica gel obtained by the pyrohydrolysis of silicon tetrachloride, alumina obtained by the pyrohydrolysis of aluminium trichloride, or the like can also be enumerated. Silica, alumina, magnesia, silica-alumina, magnesia-alumina, titania-silica, titania, molecular sieve, montmorillonite and the like are preferable, and silica is particularly preferable. A suitable silica can be produced by a conventional process, or may be any commercially available product, for example, Grace 955, Grace 948, Grace SP9-351, Grace SP9-485, Grace SP9-10046, Davsion Syloid 245 and Aerosil812 of Grace Corporation, ES70, ES70X, ES70Y, ES70W, ES757, EP10X and EP11 of Ineos corporate, and CS-2133 and MS-3040 of PQ Corporation can be enumerated.

Specifically, the explanation of the used amount of the polyethylene main catalyst is as follows.

According to the present invention, the used amount of the polyethylene main catalyst can be a used amount of the catalyst that is commonly adopted in the art. The use principle is to determine its main used amount according to the ethylene slurry polymerization activity of the catalyst, i.e. a lower used amount of the polyethylene main catalyst is used under a higher ethylene slurry polymerization activity, and a higher used amount of the polyethylene main catalyst is used under a lower ethylene slurry polymerization activity, so as to realize that the concentration of the slurry achieves the requirement of the present invention. For example, based on the active metal element in the polyethylene main catalyst, the proportion of the polyethylene main catalyst and the polymerization solvent is 0.001-0.500 mmol polyethylene main catalyst/L polymerization solvent, preferably 0.005-0.200 mmol polyethylene main catalyst/L polymerization solvent, more preferably 0.005-0.05 mmol polyethylene main catalyst/L polymerization solvent. In general, in a situation wherein the polyethylene is prepared under a high polymerization activity, e.g. at a lower hydrogen gas to ethylene molar ratio, at a higher comonomer to ethylene molar ratio, under a higher polymerization pressure, or at a higher polymerization temperature, a lower concentration of the polyethylene main catalyst can be used; on the contrary, for example, at a higher hydrogen gas to ethylene molar ratio, at a lower comonomer to ethylene molar ratio, under a lower polymerization pressure, or at a lower polymerization temperature, a higher concentration of the polyethylene main catalyst can be used. In addition, the proportion of the polyethylene main catalyst and the polymerization solvent can also be 0.005-0.05 mmol polyethylene main catalyst/L polymerization solvent.

It should be noted that in the present invention, unless otherwise specified, the molar amount of the polyethylene

main catalyst is based on the active metal element in the polyethylene main catalyst.

In addition, in the present invention, the explanation of the cocatalyst is as follows.

According to the present invention, the cocatalyst is selected from aluminoxane, alkyl aluminum, haloalkyl aluminum, fluoroborane, alkyl borane or alkyl ammonium borate or mixture thereof.

Among them, for said aluminoxane as the cocatalyst for example, a linear aluminoxane represented by the following general formula (I): $(R)(R)Al\text{-}(Al(R)\text{-}O)_n\text{-}O\text{-}Al(R)(R)$, and a cyclic aluminoxane represented by the following general formula (II): $\text{-}(Al(R)\text{-}O\text{-})_{n+2}\text{-}$ can be enumerated:

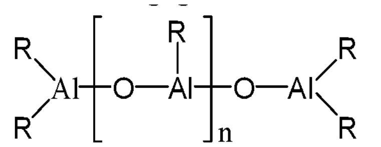 (I) 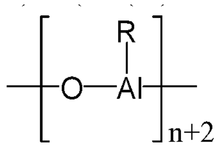 (II)

In the aforementioned general formulae (I) and (II), the groups R are identical to or different from (preferably identical to) each other, and each independently selected from $C_1$-$C_8$ alkyl, preferably methyl, ethyl, propyl, butyl, and isobutyl, most preferably methyl and isobutyl; n is any integer in the range of 1-50, preferably any integer in the range of 10-30.

As said aluminoxane, methyl aluminoxane, ethyl aluminoxane, iso-butyl aluminoxane and n-butyl aluminoxane are preferable, and methyl aluminoxane and iso-butyl aluminoxane are further preferable.

These aluminoxanes can be used alone or in combination at any proportion.

As said alkyl aluminum, for example, a compound represented by the following general formula can be enumerated:

$$Al(R)_3$$

wherein, groups R are identical to or different from (preferably identical to) each other, and are each independently selected from $C_1$-$C_8$ alkyl, preferably methyl, ethyl, propyl, butyl and iso-butyl, most preferably methyl, iso-butyl.

Specifically, as said alkyl aluminum, for example, trimethyl aluminum ($Al(CH_3)_3$), triethyl aluminum ($Al(CH_3CH_2)_3$), tri-n-propyl aluminum ($Al(C_3H_7)_3$), tri-iso-propyl aluminum ($Al(i\text{-}C_3H_7)_3$), tri-iso-butyl aluminum ($Al(i\text{-}C_4H_9)_3$), tri-n-butyl aluminum ($Al(C_4H_9)_3$), tri-iso-pentyl aluminum ($Al(i\text{-}C_5H_{11})_3$), tri-n-pentyl aluminum ($Al(C_5H_{11})_3$), tri-n-hexyl aluminum ($Al(C_6H_{13})_3$), tri-iso-hexyl aluminum ($Al(i\text{-}C_6H_{13})_3$), diethyl methyl aluminum ($Al(CH_3)(CH_3CH_2)_2$), dimethyl ethyl aluminum ($(Al(CH_3CH_2)(CH_3)_2$) and the like can be enumerated, wherein trimethyl aluminum, triethyl aluminum, tri-propyl aluminum and tri-iso-butyl aluminum are preferable, triethyl aluminum and tri-iso-butyl aluminum are most preferable.

These alkyl aluminums can be used alone or in combination at any proportion. As said haloalkyl aluminum, for example, a compound represented by the following general formula can be enumerated:

$$Al(R)_nX_{3-n}$$

wherein, groups R are identical to or different from (preferably identical to) each other, and are each independently selected from $C_1$-$C_8$ alkyl, preferably methyl, ethyl, propyl, butyl and iso-butyl, most preferably methyl, iso-butyl; X represents F, Cl, Br, or I; n represents 1 or 2.

Specifically, as the haloalkyl aluminum, for example, the following can be enumerated: monochlorodimethylaluminum ($Al(CH_3)_2Cl$), dichloromethylaluminum ($Al(CH_3)Cl_2)$)), monochlorodiethylaluminum ($Al(CH_3CH_2)_2Cl$), dichloroethylaluminum ($Al(CH_3CH_2)Cl_2$), monochlorodipropylaluminum ($Al(C_3H_7)_2Cl$), dichloropropylaluminum ($Al(C_3H_7)Cl_2)$)), monochlorodi-n-butylaluminum ($Al(C_4H_9)_2Cl$), dichloro-n-butylaluminum ($Al(C_4H_9)Cl_2$), monochlorodiisobutylaluminum ($Al(i\text{-}C_4H_9)_2Cl$), dichloro-isobutylaluminum ($Al(i\text{-}C_4H_9)Cl_2$), monochlorodi-n-pentylaluminum ($Al(C_5H_{11})_2Cl$), dichloro-n-pentylaluminum ($Al(C_5H_{11})Cl_2$), monochlorodiisopentylaluminum ($Al(i\text{-}C_5H_{11})_2Cl$), dichloro-isopentylaluminum ($Al(i\text{-}C_5H_{11})Cl_2$), monochlorodi-n-hexylaluminum ($Al(C_6H_{13})_2Cl$), dichloro-n-hexylaluminum ($Al(C_6H_{13})Cl_2$), monochlorodiisohexylaluminum ($Al(i\text{-}C_6H_{13})_2Cl$), dichloro-isohexylaluminum ($Al(i\text{-}C_6H_{13})Cl_2$), monochloromethylethylaluminum ($Al(CH_3)(CH_3CH_2)Cl$), monochloromethylpropylaluminum ($Al(CH_3)(C_3H_7)Cl$), monochloromethyl-n-butylaluminum ($Al(CH_3)(C_4H_9)Cl$), monochloromethyl-isobutylaluminum ($Al(CH_3)(i\text{-}C_4H_9)Cl$), monochloroethylpropylaluminum ($Al(CH_2CH_3)(C_3H_7)Cl$), monochloroethyl-n-butylaluminum ($AlCH_2CH_3)(C_4H_9)Cl$), monochloromethyl-isobutylaluminum ($Al(CH_2CH_3)(i\text{-}C_4H_9)Cl$), and the like, preferably monochlorodiethylaluminum, dichloroethylaluminum, monochlorodi-n-butylaluminum, dichloro-n-butylaluminum, monochlorodiisobutylaluminum, dichloro-isobutylaluminum, monochlorodi-n-hexylaluminum, dichloro-n-hexylaluminum, further preferably chlorodiethylaluminum, dichloroethylaluminum and monochlorodi-n-hexylaluminum, and most preferably monochlorodiethylaluminum.

These haloalkyl aluminums can be used alone or in combination at any proportion. As said fluoroborane, alkyl

borane and alkyl ammonium borate, those commonly used in the art can be directly used without special limitation, for example, they can be selected from trimethyl borine, triethyl borine, triphenyl borine, tri(pentafluorophenyl) borine, tri[3,5-bis(trifluoromethyl)phenyl]borine, Tris(pentafluorophenyl)borane , trityl tetrakis(pentafluorophenyl)borate, N,N-dimethylbenzene ammonium tetrakis(pentafluorophenyl)borate, 1-butyl-3-methylimidazolium tetrafluoroborate, ferrocenium tetrafluoroborate, trimethylammonium tetraphenylborate, triethylammonium tetraphenylborate, tri-propylammonium tetraphenylborate, tri-butylammonium tetraphenylborate, trimethyl ammonium tetra(para-tolyl)borate, tri-propyl ammonium tetra(para-tolyl)borate, trimethyl ammonium tetra(para,ortho-dimethylphenyl)borate, triethyl ammonium tetra(para,ortho-dimethylphenyl)borate, trimethyl ammonium tetra(para-trifluoromethylphenyl)borate, tri-butyl ammonium tetra(para-trifluoromethylphenyl)borate, tri-butyl ammonium tetrakis(pentafluorophenyl)borate, N,N-diethylbenzene ammonium tetraphenylborate, N,N-diethylbenzene ammonium tetra(pentafluorophenyl)borate, diethyl ammonium tetra(pentafluorophenyl)borate, and the like.

In addition, according to the present invention, the cocatalysts can be used alone or in combination at any proportion as required. Furthermore, the proportion of each component in the mixture is not particularly limited, and may be arbitrarily selected as required.

According to the present invention, the cocatalyst is generally used in solution form. When preparing the solution of the cocatalyst, there is no special limitation on the solvent used at this time, as long as it can dissolve the cocatalyst. Generally, an alkane solvent such as n-pentane, isopentane, cyclopentane, and neopentane, or an aromatic solvent such as toluene, ethylbenzene, and xylene can be selected. According to the present invention, in order to facilitate the subsequent separation, it is preferable to use the same solvent as the polymerization solvent or the same solvent as one of the mixed solvents used for polymerization.

It should be noted that unless otherwise specified, in the present invention, when the cocatalyst is aluminoxane, alkyl aluminum or haloalkyl aluminum, the molar amount of the cocatalyst is based on the molar amount of the Al element; and when the cocatalyst is fluoroborane, alkyl borane or alkyl ammonium borate, the molar amount of the cocatalyst is based on the molar amount of the B element.

Specifically, the ratio and the addition manner of the cocatalyst and the polyethylene main catalyst are explained as follows.

According to the present invention, for the ratio of the cocatalyst to the polyethylene main catalyst, based on the total aluminum element in aluminoxane, alkyl aluminum, haloalkyl aluminum in the cocatalyst and based on the active metal element in the polyethylene main catalyst, the molar ratio of aluminum to the active metal is 10-500:1, preferably the molar ratio of aluminum to the active metal is 20-100:1.

Based on the boron element in fluoroborane, alkyl borane or alkyl ammonium borate in the cocatalyst and based on the active metal element in the polyethylene main catalyst, the molar ratio of boron to the active metal is 1-50:1, preferably the molar ratio of boron to the active metal is 1-20:1.

Based on the total aluminum element in aluminoxane, alkyl aluminum, or haloalkyl aluminum and the boron element in fluoroborane, alkyl borane or alkyl ammonium borate in the cocatalyst and based on the active metal element in the polyethylene main catalyst, the molar ratio of aluminum:boron:active metal is 10-100:1-20:1, preferably the molar ratio of aluminum:boron:active metal is 20-50:1-10:1.

The mode of adding the polyethylene main catalyst and the cocatalyst to the polymerization reaction system is not particularly limited and can be as follows: first adding the polyethylene main catalyst and then adding the cocatalyst; or first adding the cocatalyst and then adding the polyethylene main catalyst; or first mixing by contact of the polyethylene main catalyst and the cocatalyst and then adding them together; or adding the main catalyst and the cocatalyst separately at the same time; or first adding a part of the cocatalyst, and then adding the polyethylene main catalyst and the remaining cocatalyst at the same time; or first adding a part of the polyethylene main catalyst, and then adding the remaining polyethylene main catalyst and the cocatalyst at the same time. When the polyethylene main catalyst and the cocatalyst are separately added, they can be successively added to the same charge pipe, or successively added to the different charge pipes; while when the polyethylene main catalyst and the cocatalyst are separately added at the same time, they should be added to the different charge pipes.

Specifically, the explanation of the conditions for ethylene slurry polymerization in the preparation of the ethylene polymer is as follows.

According to one embodiment of the present invention, the polymerization temperature for the slurry polymerization is 30-110°C, preferably 50-100°C. According to one embodiment of the present invention, the polymerization pressure is 0.2-4.0 MPa, preferably 1.0-3.8 MPa. According to one embodiment of the present invention, the molar ratio of hydrogen gas to ethylene is 0.01-20: 1, preferably 0.015-10:1. According to one embodiment of the present invention, the molar ratio of hydrogen gas to the comonomer is 0.1-30:1, preferably 0.15-25:1, more preferably 0.2-23: 1. According to one embodiment of the present invention, the molar ratio of the comonomer to ethylene is 0.01-0.500:1, preferably 0.015-0.350:1.

According to one embodiment of the present invention, the ratio of the polyethylene main catalyst based on the amount of the active metal to the polymerization solvent is 0.001-0.500 mmol polyethylene main catalyst/L polymerization solvent, preferably 0.005-0.200 mmol polyethylene main catalyst/L polymerization solvent, more preferably 0.005-0.05 mmol polyethylene main catalyst/L polymerization solvent. According to one embodiment of the present invention, the slurry concentration is 50-500 g polymer/L polymerization solvent, preferably 100-400 g polymer/L polymerization solvent.

Specifically, the explanation of the ethylene slurry polymerization reactor for preparing the ethylene polymer is as follows.

The process for preparing the ethylene polymer of the present invention involves the in-batch or continous ethylene slurry copolymerization is performed in a single or a plurality of ethylene slurry reactors in the presence of hydrogen gas and a gaseous or liquid-state comonomer with the continuous feeding of the gaseous ethylene or the liquid-state liquid. The ethylene slurry polymerization reactor can be a single tank reactor having a stirring mechanism, multiple-stage tank reactors having a stirring mechanism and having a configuration of first connected in series, multiple-stage tank reactors having a stirring mechanism and having a configuration of connected in parallel, multiple-stage tank reactors having a stirring mechanism and having a configuration of first connected in series and then in parallel, tank reactors having a stirring mechanism and having a configuration of first connected in parallel and then in series, tank reactors having a stirring mechanism and having a configuration of first connected in series, then in parallel and then in series, tank reactors having a stirring mechanism and having a configuration of first connected in parallel, then in series and then in parallel, and the like; preferably a single tank reactor having a stirring mechanism, multiple-stage tank reactors having a configuration of connected in series, multiple-stage tank reactors having a configuration of connected in parallel, tank reactors having a configuration of first connected in series and then in parallel, more preferably a single tank reactor having a stirring mechanism, two-stage or three-stage tank reactors having a configuration of connected in series, two-stage tank reactors having a configuration of connected in parallel, three-stage tank reactors having a configuration of first connected in series and then in parallel. Specifically, the explanation of the embodiment of the ethylene tank slurry polymerization for preparing the ethylene polymer is as follows.

When the in-batch copolymerization is used, the polyethylene main catalyst, the cocatalyst, the polymerization solvent, the comonomer, and hydrogen gas are first added to the ethylene slurry polymerization reactor according to the aforementioned ratios in one shot. Then, ethylene gas is continuously introduced while the polymerization pressure and the polymerization temperature are kept at constant levels. After the reaction is completed, the introduction of ethylene is stopped and the gas inside the tank is vented. The slurry material inside the tank is cooled to room temperature, and the discharged, filtered and dried.

In case of the in-batch copolymerization, the respective proportions of the respective amounts of hydrogen gas and the comonomer relative to ethylene are obtained by dividing the respective molar amounts of hydrogen gas and the comonomer added earlier by the total cumulative molar amount of ethylene added throughout the entire process from the beginning to the end of the reaction.

When the continuous copolymerization is used, the polyethylene main catalyst, the cocatalyst, the polymerization solvent, the comonomer, hydrogen gas, and ethylene are continuously and simultaneously added to the ethylene slurry polymerization reactor according to the aforementioned ratios. The reaction is carried out under a constant polymerization pressure and a constant polymerization temperature, and the materials generated by the polymerization reaction also continuously leave the ethylene slurry stirring tank and come into the post-treatment process of degassing, solvent-removing (such as flash evaporation, centrifugation, or filtering), drying, pelleting (which is optional), and the like.

In case of the continous copolymerization, the proportions of the respective amounts of hydrogen gas and the comonomer relative to ethylene refer to the ratio of the respective molar amounts of hydrogen gas and the comonomer relative to the molar amount of ethylene in the gas-phase components of the reactor when the polymerization process is stable.

Specifically, the explanation of the stirring manner and the stirring rate of the ethylene slurry polymerization for preparing the ethylene polymer is as follows. For the condition of the ethylene slurry polymerization having a stirring mechanism, there are no special limitations on the stirring manner and stirring speed, as long as the polyethylene main catalyst, the cocatalyst, ethylene, hydrogen gas, the comonomer, and the slurry in the ethylene slurry reactor can be fully stirred and dispersed. Generally speaking, for the stirring manner, an anchor-type stirring paddle, a ribbon-impeller-type stirring paddle, a paddle-type stirring paddle, a turbine-type stirring paddle, a propeller-type stirring paddle (rotary paddle-type), and a frame-type stirring paddle can be used. When the stirring paddle is used in the ethylene slurry polymerization reactor having a relative large height to diameter ratio (e.g. greater than 2), a multilayered stirring paddle can be used, and there is no special limitation on the stirring sealing manner. Generally speaking, the mechanical sealing or the magnetic sealing can be used. When the volume of the ethylene slurry polymerization reactor is greater than or equal to 10 $m^3$, the mechanical sealing is preferable. When the volume of the ethylene slurry polymerization reactor is less than 10$m^3$, magnetic sealing is preferable. The stirring rotation speed is related to the volume of the ethylene slurry reactor and the stirring manner. Generally speaking, when the reactor volume is relatively small (for example less than or equal to 5 $m^3$) or an anchor-type stirring paddle, a paddle-type stirring paddle, a turbine-type stirring paddle, a propeller-type stirring paddle (rotary paddle-type) or the like is used, the required stirring rotation speed is relatively high, and the

stirring rotation speed is 200-1000rpm. When the reactor volume is relatively large (for example greater than 10 $m^3$) or a ribbon-impeller-type stirring paddle, a frame-type stirring paddle, or the like is used, the required stirring rotation speed is relatively low, and the stirring rotation speed is 10-200 rpm. When the reactor volume is greater than 5 $m^3$ and less than or equal to 10 $m^3$, the stirring rotation speed is 100-500 rpm.

The explanation of the ethylene slurry polymerization temperature for preparing the ethylene polymer is as follows.

According to the present invention, the ethylene slurry polymerization temperature for preparing the ethylene polymer is the polymerization slurry temperature, which is 30-110°C, preferably 50-100°C.

The polymerization temperature has an impact on the polymerization activity of the polyethylene main catalyst, the polymerization life, the stability of the ethylene instantaneous consumption and the like, as well as on the performance of the ethylene polymer prepared by the ethylene slurry polymerization, for example, the stability of the quality such as bulk density, true density, molecular weight and its distribution, copolymerization sequence content, composition and distribution. Generally speaking, at a higher polymerization temperature (e.g. 65-110°C), the ethylene slurry polymerization activity of the polyethylene main catalyst is relatively high and the polymerization life is relatively short, the thereby obtainí ethylene polymer has a relatively low molecular weight and a relatively high melting index; while at a lower polymerization temperature (e.g. 30-65°C), the ethylene slurry polymerization activity of the polyethylene main catalyst is relatively low and the polymerization life is relatively long, the thereby obtainí ethylene polymer has a relatively high molecular weight and a relatively low melting index.

The polymerization temperature is mainly influenced by the outcome of the combined action of the heat released from the chain polymerization/combination of ethylene in the copolymerization reaction of ethylene and the comonomer performed in the polymerization solvent in the presence of the polyethylene main catalyst and the cocatalyst together with using the heating or heat-removing manner such as the heating or heat-removing of the external jacket of the ethylene slurry reactor, or the heating or heat-removing of the internal coil pipe, or the heating or heat-removing of the slurry external circulation, the heat-removing of the gas phase evaporation, or the heat-removing of the latent heat of phase change released in the conversion from gas state to liquid state, or the like. In addition, when preparing the ethylene polymer from the ethylene slurry, if it is difficult to be stably controlled at a certain temeprature, the measure such as reducing the input amount of the polyethylene main catalyst or stopping the input of the polyethylene main catalyst, reducing the polymerization pressure and increasing the molar ratio of hydrogen gas to ethylene can be used to assist in reducing and controlling the polymerization temperature, prevent and avoid the occurrence of the explosive polymerization phenomena such as the ethylene polymer agglomeration and plasticization caused by the uncontrolled polymerization temperature (e.g. the temperature rising by 0.5-2°C per minute within plus/minus 20°C of the preset polymerization temperature). In the most extreme case, the polymerization pressure can be urgently vented, or a small amount of an inactivator or an terminator such as carbon monoxide, carbon dioxide, ethanol, water vapor, or a mixture thereof can be introduced to quench the ethylene slurry polymerization activity of the polyethylene main catalyst, avoiding the occurrence of the explosive polymerization phenomena such as the ethylene polymer plasticization caused by the temperature runaway of the polymerization temperature (e.g. the temperature rising by higher than 2°C per minute within plus/minus 20°C of the preset polymerization temperature).

Specifically, the explanation of the ethylene slurry polymerization pressure for preparing the ethylene polymer is as follows.

According to the present invention, the ethylene slurry polymerization pressure for preparing the ethylene polymer is the total pressure of the ethylene slurry polymerization reactor, which is determined by the partial pressures and the vapor pressures of ethylene, the cocatalyst, the dissolved solvent, hydrogen gas, the comonomer, the polymerization solvent and the like at the polymerization temperature in the ethylene slurry polymerization reactor as well as the optionally added inert gas, and it is 0.2-4.0 MPa, preferably 1.0-3.8 MPa. The polymerization pressure can also be 1.2-3.6 MPa.

Similar to the temperature of the ethylene slurry polymerization, the polymerization pressure has an impact on exerting the polymerization activity of the polyethylene main catalyst, the polymerization life, the stability of the ethylene instantaneous consumption and the like, as well as on the performance of the ethylene polymer prepared by the ethylene slurry polymerization, for example, the stability of the quality such as bulk density, true density, molecular weight and its distribution, copolymerization sequence content, composition and distribution. In general, under a higher polymerization pressure (e.g. 1.5-4.0 MPa), the ethylene slurry polymerization activity of the polyethylene main catalyst is relatively high; while under a lower polymerization pressure (e.g. 0.2-1.5 MPa), the ethylene slurry polymerization activity of the polyethylene main catalyst is relatively low. The comprehensive consideration of various factors and conditions of the ethylene polymer should be required in the selection of the ethylene slurry polymerization pressure. Generally speaking, when selecting an alkane solvent having a lower boiling point or a mixed alkane solvent having a higher vapor pressure at 20°C as the polymerization solvent, a higher polymerization pressure can be implemented to exert the ethylene slurry polymerization activity of the polyethylene main catalyst and reduce the polymerization cost. According to the present inventors' research, it is found that by using an alkane solvent having a boiling point of 5-55°C such as n-pentane,

neopentane, cyclopentane, isopentane or the like or a mixed alkane solvent having a saturated vapor pressure at 20°C of 20-150 KPa as the polymerization solvent, a polymerization pressure higher than 1.5MPa can be implemented. A high polymerization pressure can provide ample selection space for the polymerization conditions, provided that the ethylene slurry polymerization activity of the polyethylene main catalyst is adequately released, to use a higher molar ratio of hydrogen gas to ethylene and a higher molar ratio of the comonomer to ethylene, furthermore can make the adjusting and controlling within a relatively large range of the polymerization process conditions to obtain ethylene polymers with different molecular weights, different melt indices, different comonomer insertion rates, different true densities and the like. At the same time, the present inventors unexpectedly found that an excessive polymerization pressure does not naturally lead to a high ethylene slurry polymerization activity of the polyethylene main catalyst. For example, it can be seen from one polymerization example that the polymerization activity of the polyethylene main catalyst sharply decreases when it is above 4.0 MPa, and there is scarcely any significant polymerization activity (polymerization activity: lower than 1 KgPE/g polyethylene main catalyst) during the initial period (0-1 hour) in which the ethylene slurry polymerization is started.

Specifically, the explanation of the comonomer for ethylene slurry polymerization in the preparation of the ethylene polymer is as follows.

According to the present invention, the comonomer is selected from alpha-olefins, diolefins, cyclic olefins and other olefinic unsaturated compounds.

Specifically, as said alpha-olefin, it can be a C3-C10 alpha-olefin, for example, propene, 1-butene, 1-hexene, 1-heptylene, 4-methyl-1-pentene, 1-octene, 1-decene, 1-undecene, 1-dodecene, styrene and the like can be enumerated. As the cyclic olefin, for example, 1-cyclopentene, ethylidene norbornene, and norbornene can be enumerated. As the diolefin, for example, 1,4-butadiene, 2,5-pentadiene, 1,6-heptadiene, vinylnorbornene, norbornadiene, 1,7-octadiene and the like can be enumerated. As said other olefinic unsaturated compound, for example, vinyl acetate, (meth)acrylate and the like can be enumerated. Among them, the comonomer is preferably C3-C10 alpha-monoolefin, more preferably at least one of propene, 1-butene, 1-hexene, and 1-octene.

During the polymerization reaction, ethylene and the comonomer are charged together into the polymerization tank to perform the polymerization reaction. In the present invention, "ethylene and the comonomer are charged together into the polymerization tank" refers to feeding ethylene and the comonomer together into the reaction tank and performing the polymerization reaction together without the presence of segmented polymerization steps, that is, there are neither segmented steps of first polymerizing ethylene and then adding the comonomer for the polymerization, nor segmented steps of homogenizing the comonomer and then adding ethylene for the polymerization. The obtained polyethylene has a random copolymerization structure.

Using the copolymerization of ethylene and the above-mentioned comonomer can reduce the true density and the crystallinity of the ethylene polymer, improve and enhance the mechanical properties, such as improving mechanical strength and toughness, and increasing environmental stress cracking resistance.

According to the present invention, the molar ratio of the comonomer to ethylene is 0.01-0.500:1, preferably 0.015-0.350:1. Within the range of the molar ratio of the comonomer to ethylene provided by the present invention and under the appropriate polymerization conditions such as the polyethylene main catalyst, it is possible to adjust and control the properties of the aforementioned ethylene polymer, such as melting index (e.g. melting index at a load of 2.16Kg at 190°C), true density, comonomer insertion rate, weight-average molecular weight, molecular weight distribution, crystallinity, melting point, and the like.

Next, the explanation of the molar ratio of hydrogen gas to ethylene in the ethylene slurry polymerization for preparing the ethylene polymer is as follows. Hydrogen, as the chain transfer agent and the terminator for the ethylene slurry polymerization, is mainly used to reduce the melting index and the molecular weight of the thereby obtained ethylene polymer, and hence to produce oligomers in the form of copolymerization. Generally speaking, the ethylene polymer obtained under the ethylene slurry polymerization condition with a high molar ratio of hydrogen to ethylene has a lower molecular weight and a higher melting index. Conversely, the ethylene polymer obtained under the ethylene slurry polymerization condition with a low molar ratio of hydrogen to ethylene has a higher molecular weight and a lower melting index. Under a certain polymerization pressure condition, the presence of hydrogen gas will reduce the ethylene partial pressure, thereby reducing the ethylene slurry polymerization activity of the polyethylene main catalyst.

It is found through the research of the present inventors that when the supported metallocene catalysts, the partially-supported non-metallocene catalysts, and the partially-supported post-transition metal catalyst are used as the polyethylene main catalyst, their ethylene slurry polymerization reaction is more sensitive to hydrogen gas.

According to the present invention, in the ethylene slurry polymerization condition, the molar ratio of hydrogen gas to ethylene is 0.01-20:1, preferably 0.015-10:1, and further preferably 0.02-5:1.

In one embodiment of the present invention, when the non-metallocene catalyst is used as the main catalyst in the slurry polymerization, the molar ratio of hydrogen gas to ethylene is 0.01-20:1, preferably 0.015-10:1, and further preferably 0.02-5:1.

In one embodiment of the present invention, when the metallocene catalyst is used as the main catalyst in the

slurry polymerization, the molar ratio of hydrogen gas to ethylene is 0.01-0.15:1, preferably 0.015-0.1:1, and further preferably 0.02-0.08:1.

In one embodiment of the present invention, when the Ziegler-Natta catalyst is used as the main catalyst in the slurry polymerization, the molar ratio of hydrogen gas to ethylene is 0.01-20:1, preferably 0.015-10:1, and further preferably 0.02-5:1.

Next, the explanation of the molar ratio of the comonomer to ethylene in the ethylene slurry polymerization for preparing the ethylene polymer is as follows.

It is found by the inventors of the present invention that under comparable conditions and under specific reaction conditions of the present invention, by adjusting the molar ratio of hydrogen gas to the comonomer to the specific range, the specific oligomer of the copolymer type can be produced during the polymerization reaction. Furthermore, in combination with the specific polymerization solvent of the present invention, the oligomer can be retained in the obtained ethylene polymer, and thereby the processing performance of the ethylene polymer can be improved.

According to the present invention, in the ethylene slurry polymerization condition, the molar ratio of hydrogen gas to the comonomer is 0.1-30: 1, preferably 0.15-25:1, more preferably 0.2-23:1.

In one embodiment of the present invention, when the non-metallocene catalyst is used as the main catalyst in the slurry polymerization, the molar ratio of hydrogen gas to the comonomer is 8-30:1, preferably 10-25:1, more preferably 12-23:1.

In one embodiment of the present invention, when the metallocene catalyst is used as the main catalyst in the slurry polymerization, the molar ratio of hydrogen gas to the comonomer is 0.1-5:1, preferably 0.15-3:1, and more preferably 0.2-2:1.

In one embodiment of the present invention, when the Ziegler-Natta catalyst is used as the main catalyst in the slurry polymerization, the molar ratio of hydrogen gas to the comonomer is 8-30:1, preferably 10-25:1, more preferably 12-23:1.

In addition, the explanation of the residence time of the ethylene slurry polymerization for preparing the ethylene polymer is as follows.

The present invention has no special limitation on the polymerization residence time, which can be selected according to the comprehensive conditions such as the polymerization pressure, the polymerization temperature, the molar ratio of hydrogen gas to ethylene, the molar ratio of the comonomer to ethylene, the polymerization activity of the polyethylene main catalyst, the polymerization activity life, the used amount of the polyethylene main catalyst and the slurry concentration. Generally speaking, a shorter polymerization time can be selected for the high polymerization activity. For example, based on the polyethylene main catalyst, when the ethylene slurry polymerization activity is below 1 ×104 g polyethylene/g polyethylene main catalyst per hour, the polymerization residence time can be 1-12 hours, preferably 2-8 hours; when the ethylene slurry polymerization activity is higher than or equal to 1 $\times 10^4$ g polyethylene/g polyethylene main catalyst but less than 3 $\times 10^4$ g polyethylene/g polyethylene main catalyst per hour, the polymerization residence time can be 0.5-6 hours, preferably 1-4 hours; when the ethylene slurry polymerization activity is higher than or equal to 3 $\times 10^4$ g polyethylene/g polyethylene main catalyst per hour, the polymerization residence time can be 0.2-4 hours, preferably 0.5-2 hours, but not limited thereto.

In addition, the explanation of the ethylene slurry concentration for preparing the ethylene polymer is as follows.

The slurry concentration of the ethylene polymer in the ethylene slurry polymerization is an important indicator reflecting the degree of ethylene slurry polymerization process. If the concentration is too low, the preparation cost is high due to the separation of the solvent and the materials. If the concentration is too high, it is difficult to fully disperse by stirring, resulting in the poor heat transfer effect and thereby the uneven materials in the reactor, which is not conducive to obtaining the ethylene polymer. According to the present invention, the slurry concentration of the ethylene polymer in the ethylene slurry polymerization reactor is 50-500 g polyethylene/L polymerization solvent, preferably 100-400 g polyethylene/L polymerization solvent.

In one embodiment of the present invention, there is provided an ethylene polymer, wherein the ethylene polymer has an average particle size of 50-3000 μm, a bulk density of 0.28-0.55 g/cm$^3$, a true density of 0.920-0.980 g/cm$^3$, a melt index at a load of 2.16Kg at 190°C of 0-2000 g/10min, a crystallinity of 30-90%, a melting point of 105-147°C, a comonomer molar insertion rate of 0-5 mol%, a weight-average molecular weight of 1 $\times 10^4$ g/mol - 150 $\times 10^4$ g/mol, and a molecular weight distribution of 1.9-20.0.

In one embodiment of the present invention, there is provided an ethylene polymer, wherein the ethylene polymer has an average particle size of 100-1000 μm, a bulk density of 0.33-0.50 g/cm$^3$, a true density of 0.930-0.960 g/cm$^3$, a melt index at a load of 2.16Kg at 190°C of 0-1000 g/10min, a crystallinity of 40-80%, a melting point of 110-143°C, a comonomer molar insertion rate of 0-3.5 mol%, a weight-average molecular weight of 2 $\times 10^4$ g/mol - 150 $\times 10^4$ g/mol, and a molecular weight distribution of 2.2-10.0.

In one embodiment of the present invention, a process for preparing an ethylene polymer is provided, wherein an in-batch or continuous ethylene slurry polymerization is performed by using an alkane solvent having a boiling point of 5-55°C or a mixed alkane solvent having a saturated vapor pressure at 20°C of 20-150 KPa (preferably 30-80 KPa)

as the polymerization solvent, in the presence of a polyethylene catalytic system including at least one of the non-metallocene catalyst, the metallocene catalyst, and the Ziegler-Natta catalyst as the main catalyst, under the conditions where the polymerization temperature is 30-110°C, the polymerization pressure is 0.2-4.0 MPa, the molar ratio of hydrogen gas to ethylene is 0-40:1, the molar ratio of the comonomer to ethylene is 0-1:1, the proportion of the polyethylene main catalyst and the polymerization solvent is 0.001-0.500 mmol polyethylene main catalyst/L polymerization solvent, and the slurry concentration is 50-500 g polymer/L polymerization solvent.

In one embodiment of the present invention, a process for preparing an ethylene polymer is provided, wherein an in-batch or continuous ethylene slurry polymerization is performed under the conditions where the polymerization temperature is 50-95°C, the polymerization pressure is 0.5-3.0 MPa, the molar ratio of hydrogen gas to ethylene is 0.01-20:1, the molar ratio of the comonomer to ethylene is 0.01-0.50:1, the proportion of the polyethylene main catalyst and the polymerization solvent is 0.005-0.200 mmol polyethylene main catalyst/L polymerization solvent, the slurry concentration is 100-400 g polymer/L polymerization solvent.

The ethylene polymer provided in the present invention has excellent physical properties and processing performance and can be applied in fields such as textiles, papermaking, food, chemical industry, packaging, agriculture, construction, medical treatment, filter cartridges for filtration equipment, sports, entertainment, and military.

Example

The present invention will be described in further detail with reference to examples, but the present invention is not limited to these examples.

The determination of the bulk density (in g/cm$^3$) of the ethylene polymer is carried out in accordance with the standard GB 1636-79, and the true density (in g/cm$^3$) of the ethylene polymer is determined in a density tube in accordance with the standard GB/T 1033-86.

The content of the active metal element in the polyethylene main catalyst is determined by the ICP-AES method.

The polymerization activity of the polyethylene main catalyst is calculated according to the following process: when using the in-batch ethylene slurry process, after the polymerization reaction is completed, the polymerization product in the reactor is filtered and dried, and then the polymerization product is weighed, the polymerization activity of the catalyst is represented by the ratio of the mass of the polymerization product divided by the mass of the used polyethylene main catalyst (kg ethylene polymer/g catalyst or kg PE/gCat); when using the continuous ethylene slurry process, at the equability state (where the polymerization pressure, the polymerization temperature, and the gas phase composition remain stable), the instantaneous consumption rate of ethylene (also known as the absorption amount) divided by the continuous addition rate of the polyethylene main catalyst is used to represent the polymerization activity of the catalyst (in kilogram ethylene polymer/gram catalyst or kgPE/gCat).

The slurry concentration is calculated as follows, a sample is uniformly taken from the ethylene slurry polymerization reactor and weighed and recorded as m1 (in gram), and then fully dried to obtain dry ethylene polymer m2 (in gram). The density of the polymerization solvent is ρ (in g/ml), and the slurry concentration is calculated according to the following equation.

$$\text{Slurry concentration} = \frac{m_2}{(m_1 - m_2)/\rho}$$

The determination of the melting index of the ethylene polymer (190°C; the load is 2.16 kg, or if otherwise specified, the load is 5 kg or 21.6 kg) is performed according to the standard GB T 3682-2000 (in g/10min).

The average particle size of the polymer is measured on the Microtrac S3500 laser particle size analyzer, with a particle size measurement range of 0.01-10000 microns.

The weight-average molecular weight Mw (in 10$^4$ g/mol), the number-average molecular weight Mn (in 10$^4$ g/mol), and the molecular weight distribution (MWD) of the ethylene polymer are measured with GPC PL220 high-temperature gel chromatographic analyzer of Agilent, Inc., where four Agilent PLgel Olexis chromatographic columns are used, 1,2,4-trichlorobenzene is used as the mobile phase, and the temperature during measurement is 150°C, the calculation is performed according to MWD=Mw/Mn, wherein Mw is the weight-average molecular weight and Mn is the number-average molecular weight.

The determination of the comonomer content in the ethylene polymer is performed as follows, a copolymer with a known content is calibrated with a 600M nuclear magnetic resonance apparatus of the Bruck Corporation and the measurement is performed with a 66/S Fourier transform infrared spectrometer of German Bruck Corporation.

The determination of the crystallinity and the melting point of the ethylene polymer is performed by using a differential thermal scanning calorimetry. The instrument is the Q1000 DSC differential thermal scanning calorimeter of TA Corporation, USA, and the determination is performed according to the standard YYT0815-2010.

The determination of the solvent residual content in the wet material after polymerization reaction is performed as follows: directly filtering the ethylene polymer powder obtained after the polymerization reaction is completed in the polymerization reactor with a 100 mesh filter screen, weighing the wet polymer and recording the mass as m1, and then completely drying the wet polymer under the vacuum of 20 mBar at 80°C and weighing the dried polymer powder and recording the mass as m2, and then calculating out the solvent residual content.

$$\text{Solvent residual content}=\left(\frac{\text{m1}-\text{m2}}{\text{m2}}\right)\times 100\%$$

The processing index in the film blowing test is determined as follows: The ethylene polymers are subjected to the film-blowing tests that are conducted on the GÖTTFERT Xtrude 1400 film-blowing machine. The main screw diameter is 45mm, the length-to-diameter ratio is 25, the die head diameter is 80mm, and the die head gap is 0.8mm. Circular air cooling is used, and the cooling air temperature is 20°C. The screw rotation speed of the extruder is 20 rpm, the blowing expansion ratio is 2.3, the pulling speed is 8m/min±0.5m/min, the cooling line height is 230mm-250mm, and the film thickness is 0.03mm±0.003mm.

In the film blowing test, the magnitude of the electric current of the main machine (in A) reflects the processing index of the polymer in the blowing film test.

The processing index in the blowing film test reflects the processing performance of the polymer, that is, the lower the electric current of the main machine, the better the polymer processing performance. However, on the other hand, if it is too small, the extrusion pressure cannot be formed, being unable to lead to molding and processing.

When the processing index in the film blowing test is lower than 4.0, it indicates that the polymer is very easy to extrude during extrusion, and it is difficult to form an effective extrusion pressure, making it unable to perform the film-blowing and molding; When the processing index in the film blowing test is higher than 6.0, it indicates that the polymer is very difficult to extrude during extrusion, and the extrusion pressure is too high, making it difficult to perform the film-blowing and processing; When the processing index in the film blowing test is between 4.0-6.0, it indicates that during the extrusion and processing of the polymer, the extrusion pressure is appropriate, making it easy to perform the film-blowing and processing; When the processing index in the film blowing test is between 4.0 and 6.0, the lower the processing index, the better the processing performance.

In order to better illustrate the ethylene polymer and its preparation process of the present invention, the following three catalysts are used in specific examples as the polyethylene main catalyst for the ethylene slurry polymerization: The supported non-metallocene catalyst (CAT-1) is prepared according to Example 1 of Chinese patent ZL200710162677.5, wherein the active metal titanium element content is 4.25wt%.

The supported metallocene catalyst (CAT-2) is prepared according to Chinese patent ZL201010521674.8, wherein the active metal zirconium element content is 0.62wt%.

The Zeigler-Natta type catalyst (CAT-3) is prepared according to Example 1 of Chinese patent ZL201010240378.0, wherein the active metal titanium element content is 9.5wt%.

However, according to the present invention, the polyethylene main catalyst involved therein includes, but is not limited to, the above-mention specific catalysts, and should be subject to the claims.

Example 1

The polyethylene main catalyst was a supported non-metallocene catalyst CAT-1 (having a concentration of 0.024 mmol/L), the cocatalyst was a solution of triethyl aluminum (TEAL) in pentane (having a concentration of 1.0 mol/L), the polymerization pressure was 1.8 MPa, the polymerization temperature was 85°C, the polymerization solvent was n-pentane (having a boiling point of 36.1°C) with the used amount of 2.5 L, and the comonomer was 1-hexene.

A 5L anchored ethylene slurry polymerization tank with a stirrer (also called polymerization autoclave) was used. First, 2.5L of the polymerization solvent was added to the polymerization autoclave at room temperature, the agitation was started with a rotational speed of 300 rpm. Then a mixture of the polyethylene catalyst and the cocatalyst was added in one shot, then the copolymerization monomer was added in one shot, then hydrogen gas was added, and finally ethylene was continuously introduced to keep the polymerization pressure and the polymerization temperature constant. After the continuous reaction for 2 hours, the gas inside the tank was vented, and the polymer inside the tank was released and weighed after drying to produce the ethylene polymer that was called PE-1. The preparation procedure and conditions of the ethylene polymer were shown in Table 1-1, and the properties of the ethylene polymer were shown in Table 1-2.

Example 1-1

It was basically the same as Example 1, but with the following changes:
the concentration of the polyethylene main catalyst was changed to 0.021 mmol/L, the cocatalyst was a solution of triethyl aluminum in cyclopentane (having a concentration of 1.0 mol/L), the polymerization pressure was 1.2 MPa, the polymerization temperature was 95°C, the polymerization solvent was cyclopentane (having a boiling point of 49.26°C) with the used amount of 2.5L, the comonomer was 1-octene, the rotational speed was 240 rpm, the polymerization time was 1.5 hours, the ethylene polymer was called PE-1-1. The preparation procedure and conditions of the ethylene polymer were shown in Table 1-1, and the properties of the ethylene polymer were shown in Table 1-2.

Example 1-2

It was basically the same as Example 1, but with the following changes:
the concentration of the polyethylene main catalyst was changed to 0.028 mmol/L, the cocatalyst was a solution of triethylaluminum of 2-methylbutane (also known as isopentane) (having a concentration of 1 mol/L), the polymerization pressure was 2.4 MPa, the polymerization temperature was 78°C, the polymerization solvent was isopentane (having a boiling point of 27.83°C) with the used amount of 2.5L. The rotational speed was 200 rpm. After the polymerization time of 3 hours, the gas inside the tank was vented, the polymer inside the tank was released and weighed after drying to produce the ethylene polymer that was called PE-1-2. The preparation procedure and conditions of the ethylene polymer were shown in Table 1-1, and the properties of the ethylene polymer were shown in Table 1-2.

Example 1-3

It was basically the same as Example 1, but with the following changes:
the cocatalyst was a solution of tri-iso-butyl aluminum (TIBA) in neopentane (having a concentration of 2.0 mol/L), the polymerization pressure was 3.6 MPa, the polymerization temperature was 62°C, the polymerization solvent was neopentane (having a boiling point of 9.5°C) with the used amount of 2.5L, the comonomer was 1-butene, the rotational speed was 40 rpm, the polymerization time was 1 hour, the ethylene polymer was called PE-1-3. The preparation procedure and conditions of the ethylene polymer were shown in Table 1-1, and the properties of the ethylene polymer were shown in Table 1-2.

Example 1-4

It was basically the same as Example 1, but with the following changes:
the polymerization solvent was a mixed alkane solvent composed of n-pentane and isopentane according to the molar proportion of 1:1 and having a saturated vapor pressure at 20°C of 66.6 KPa. The used solvent for the cocatalyst was also the same mixed alkane solvent.
The ethylene polymer was called PE-1-4. The preparation procedure and conditions of the ethylene polymer were shown in Table 1-1, and the properties of the ethylene polymer were shown in Table 1-2.

Example 1-5

It was basically the same as Example 1, but with the following changes:
the polymerization solvent was a mixed alkane solvent composed of neopentane and isopentane according to the molar proportion of 0.5:1 and having a saturated vapor pressure at 20°C of 100.01 KPa. The used solvent for the cocatalyst was also the same mixed alkane solvent.
The ethylene polymer was called PE-1-5. The preparation procedure and conditions of the ethylene polymer were shown in Table 1-1, and the properties of the ethylene polymer were shown in Table 1-2.

Example 1-6

It was basically the same as Example 1, but with the following changes:
the polymerization solvent was a mixed alkane solvent composed of isopentane and cyclopentane according to the molar proportion of 8:1 and having a saturated vapor pressure at 20°C of 72.02KPa. The used solvent for the cocatalyst was also the same mixed alkane solvent.
The ethylene polymer was called PE-1-6. The preparation procedure and conditions of the ethylene polymer were shown in Table 1-1, and the properties of the ethylene polymer were shown in Table 1-2.

Comparative Example 1-1

It was basically the same as Example 1, but with the following changes:
the polymerization solvent was changed to a hexane solvent, the solvent for the cocatalyst was changed to a hexane solution, the ethylene polymer was called CPE-1-1. The preparation procedure and conditions of the ethylene polymer were shown in Table 1-1, and the properties of the ethylene polymer were shown in Table 1-2.

Comparative Example 1-2

It was basically the same as Example 1-3, but with the following changes:
the polymerization solvent was changed to a hexane solvent, the solvent for the cocatalyst was changed to a hexane solution, the ethylene polymer was called CPE-1-2. The preparation procedure and conditions of the ethylene polymer were shown in Table 1-1, and the properties of the ethylene polymer were shown in Table 1-2.

Comparative Example 1-3

It was basically the same as Example 1, but with the following changes:
No hydrogen gas was added, the molar ratio of the comonomer 1-hexene to ethylene was 1, and the catalyst concentration was changed to 0.007 mmol/L.

The ethylene polymer was called CPE-1-3. The preparation procedure and conditions of the ethylene polymer were shown in Table 1-1, and the properties of the ethylene polymer were shown in Table 1-2. The polymer could not be shaped and severely stuck to the tank.

Comparative Example 1-4

It was basically the same as Example 1, but with the following changes:
Hydrogen gas and the comonomer were not added, i.e., the molar ratio of hydrogen gas to ethylene was 0, the molar ratio of the comonomer to ethylene was 0, the polymerization time was 8 hours, and the catalyst concentration was changed to 0.007 mmol/L.

The ethylene polymer was called CPE-1-4. The preparation procedure and conditions of the ethylene polymer were shown in Table 1-1, and the properties of the ethylene polymer were shown in Table 1-2. The polymer had such a high molecular weight that Mw and Mn could not be determined with GPC, and could not be processed by extrusion.

Comparative Example 1-5

It was basically the same as Example 1, but with the following changes:
the molar ratio of hydrogen gas to ethylene was 30, no comonomer was added, i.e., the molar ratio of the comonomer to ethylene was 0, and the catalyst concentration was changed to 0.180 mmol/L.

The ethylene polymer was called CPE-1-5. The preparation procedure and conditions of the ethylene polymer were shown in Table 1-1, and the properties of the ethylene polymer were shown in Table 1-2. The polymer had a high melting index and an extremely low molecular weight, and could not be processed by extrusion into shape.

Comparative Example 1-6

It was basically the same as Example 1, but with the following changes:
the molar ratio of hydrogen gas to the comonomer was 0.05, and the catalyst concentration was changed to 0.180 mmol/L.

The ethylene polymer was called CPE-1-6. The preparation procedure and conditions of the ethylene polymer were shown in Table 1-1, and the properties of the ethylene polymer were shown in Table 1-2. The polymer could not be shaped and severely stuck to the tank.

Comparative Example 1-7

It was basically the same as Example 1, but with the following changes:
the molar ratio of hydrogen gas to the comonomer was 40.

The ethylene polymer was called CPE-1-7. The preparation procedure and conditions of the ethylene polymer were shown in Table 1-1, and the properties of the ethylene polymer were shown in Table 1-2.

Example 2

It was basically the same as Example 1, but with the following changes:
the used polyethylene main catalyst was the supported metallocene catalyst CAT-2, the cocatalyst was changed to a solution of methyl aluminoxane (MAO) in n-pentane (having a concentration of 10wt%), the concentration of the polyethylene main catalyst was changed to 0.005 mmol/L, the molar ratio of hydrogen gas to ethylene was changed to 0.05, the ethylene polymer was called PE-2. The preparation procedure and conditions of the ethylene polymer were shown in Table 2-1, and the properties of the ethylene polymer were shown in Table 2-2.

Example 2-1

It was basically the same as Example 1-1, but with the following changes:
the used polyethylene main catalyst was the supported metallocene catalyst CAT-2, the cocatalyst was changed to a solution of methyl aluminoxane in cyclopentane (having a concentration of 30wt%), the concentration of the polyethylene main catalyst was changed to 0.005 mmol/L, the molar ratio of hydrogen gas to ethylene was 0.02, the molar ratio of the comonomer to ethylene was 0.02, and the ethylene polymer was called PE-2-1. The preparation procedure and conditions of the ethylene polymer were shown in Table 2-1, and the properties of the ethylene polymer were shown in Table 2-2.

Example 2-2

It was basically the same as Example 1-2, but with the following changes:
the used polyethylene main catalyst was the supported metallocene catalyst CAT-2, the cocatalyst was changed to a solution of tri-iso-butyl aluminum in isopentane (having a concentration of 1 mol/L), the concentration of the polyethylene main catalyst was changed to 0.015 mmol/L, the molar ratio of hydrogen gas to ethylene was 0.07:1, and the ethylene polymer was called PE-2-2. The preparation procedure and conditions of the ethylene polymer were shown in Table 2-1, and the properties of the ethylene polymer were shown in Table 2-2.

Example 2-3

It was basically the same as Example 1-3, but with the following changes:
the used polyethylene main catalyst was the supported metallocene catalyst CAT-2, the cocatalyst was changed to a solution of methyl aluminoxane in neopentane (having a concentration of 10wt%), the concentration of the polyethylene main catalyst was changed to 0.005 mmol/L, the molar ratio of hydrogen gas to ethylene was 0.04:1, and the ethylene polymer was called PE-2-3. The preparation procedure and conditions of the ethylene polymer were shown in Table 2-1, and the properties of the ethylene polymer were shown in Table 2-2.

Example 2-4

It was basically the same as Example 2, but with the following changes:
the polymerization solvent was a mixed alkane solvent composed of n-pentane, isopentane and cyclopentane according to the molar proportion of 1:1:1 and having a saturated vapor pressure at 20°C of 55.93KPa, the used solvent for the cocatalyst was the same polymerization solvent (having a concentration of 10wt%), the concentration of the polyethylene main catalyst was 0.005 mmol/L, the molar ratio of hydrogen gas to ethylene was 0.05 :1, and the ethylene polymer was called PE-2-4. The preparation procedure and conditions of the ethylene polymer were shown in Table 2-1, and the properties of the ethylene polymer were shown in Table 2-2.

Example 2-5

It was basically the same as Example 2, but with the following changes:
the polymerization solvent was a mixed alkane solvent composed of neopentane and isopentane according to the molar proportion of 0.5:1 and having a saturated vapor pressure at 20°C of 100.01 KPa. The used solvent for the cocatalyst was also the same mixed alkane solvent.

The ethylene polymer was called PE-2-5. The preparation procedure and conditions of the ethylene polymer were shown in Table 2-1, and the properties of the ethylene polymer were shown in Table 2-2.

Example 2-6

It was basically the same as Example 2, but with the following changes: the polymerization solvent was a mixed alkane solvent composed of isopentane and cyclopentane according to the molar proportion of 8:1 and having a saturated vapor pressure at 20°C of 72.02KPa. The used solvent for the cocatalyst was also the same mixed alkane solvent.

The ethylene polymer was called PE-2-6. The preparation procedure and conditions of the ethylene polymer were shown in Table 2-1, and the properties of the ethylene polymer were shown in Table 2-2.

Comparative Example 2-1

It was basically the same as Example 2, but with the following changes: the polymerization solvent was changed to a hexane solvent, the solvent for the cocatalyst was changed to a hexane solution, and the ethylene polymer was called CPE-2-1. The preparation procedure and conditions of the ethylene polymer were shown in Table 2-1, and the properties of the ethylene polymer were shown in Table 2-2.

Comparative Example 2-2

It was basically the same as Example 2-3, but with the following changes: the polymerization solvent was changed to a hexane solvent, the solvent for the cocatalyst was changed to a hexane solution, and the ethylene polymer was called CPE-2-2. The preparation procedure and conditions of the ethylene polymer were shown in Table 2-1, and the properties of the ethylene polymer were shown in Table 2-2.

Comparative Example 2-3

It was basically the same as Example 2, but with the following changes: No hydrogen gas was added, the molar ratio of the comonomer 1-hexene to ethylene was 1.

The ethylene polymer was called CPE-2-3. The preparation procedure and conditions of the ethylene polymer were shown in Table 2-1, and the properties of the ethylene polymer were shown in Table 2-2. The polymer could not be shaped and severely stuck to the tank.

Comparative Example 2-4

It was basically the same as Comparative Example 1-4, but with the following changes: Hydrogen gas and the comonomer were not added, i.e., the molar ratio of hydrogen gas to ethylene was 0, the molar ratio of the comonomer to ethylene was 0, the polymerization time was 8 hours, the used polyethylene main catalyst was the supported metallocene catalyst CAT-2, the concentration of the polyethylene main catalyst was changed to 0.002 mmol/L, and the ethylene polymer was called CPE-2-4. The preparation procedure and conditions of the ethylene polymer were shown in Table 2-1, and the properties of the ethylene polymer were shown in Table 2-2. The polymer had such a high molecular weight that Mw and Mn could not be determined with GPC, and could not be processed by extrusion.

Comparative Example 2-5

It was basically the same as Example 2, but with the following changes: the molar ratio of hydrogen gas to ethylene was 30, no comonomer was added, i.e., the molar ratio of the comonomer to ethylene was 0, and the catalyst concentration was changed to 0.200 mmol/L.

The ethylene polymer was called CPE-2-5. The preparation procedure and conditions of the ethylene polymer were shown in Table 2-1, and the properties of the ethylene polymer were shown in Table 2-2. The polymer had a high melting index and an extremely low molecular weight, and could not be processed by extrusion into shape.

Comparative Example 2-6

It was basically the same as Example 2, but with the following changes: the molar ratio of hydrogen gas to the comonomer was 0.01, and the catalyst concentration was changed to 0.200 mmol/L.

The ethylene polymer was called CPE-2-6. The preparation procedure and conditions of the ethylene polymer were shown in Table 2-1, and the properties of the ethylene polymer were shown in Table 2-2. The polymer could not be shaped and severely stuck to the tank.

Example 3

It was basically the same as Example 1, but with the following changes:
the used polyethylene main catalyst was the Zeigler-Natta type catalyst CAT-3, the concentration of the polyethylene main catalyst was changed to 0.024 mmol/L, and the ethylene polymer was called PE-3. The preparation procedure and conditions of the ethylene polymer were shown in Table 3-1, and the properties of the ethylene polymer were shown in Table 3-2.

Example 3-1

It was basically the same as Example 1-1, but with the following changes:
the used polyethylene main catalyst was the Zeigler-Natta type catalyst CAT-3, the concentration of the polyethylene main catalyst was changed to 0.018 mmol/L, the polymerization time was changed to 0.5 hours, the ethylene polymer was called PE-3-1. The preparation procedure and conditions of the ethylene polymer were shown in Table 3-1, and the properties of the ethylene polymer were shown in Table 3-2.

Example 3-2

It was basically the same as Example 1-2, but with the following changes:
the used polyethylene main catalyst was the Zeigler-Natta type catalyst CAT-3, the concentration of the polyethylene main catalyst was changed to 0.048 mmol/L, and the ethylene polymer was called PE-3-2. The preparation procedure and conditions of the ethylene polymer were shown in Table 3-1, and the properties of the ethylene polymer were shown in Table 3-2.

Example 3-3

It was basically the same as Example 1-3, but with the following changes:
the used polyethylene main catalyst was the Zeigler-Natta type catalyst CAT-3, the cocatalyst was changed to a solution of tri-iso-butyl aluminum (TIBA, having a concentration of 1 mol/L) in neopentane, the concentration of the polyethylene main catalyst was changed to 0.012 mmol/L, and the ethylene polymer was called PE-3-3. The preparation procedure and conditions of the ethylene polymer were shown in Table 3-1, and the properties of the ethylene polymer were shown in Table 3-2.

Example 3-4

It was basically the same as Example 1-4, but with the following changes:
the used polyethylene main catalyst was the Zeigler-Natta type catalyst CAT-3, the polymerization solvent was a mixed alkane solvent composed of neopentane and isopentane according to the molar proportion of 0.5:1 and having a saturated vapor pressure at 20°C of 100.01 KPa, the used solvent for the cocatalyst was also the same mixed alkane solvent, the concentration of the polyethylene main catalyst was changed to 0.024 mmol/L, and the ethylene polymer was called PE-3-4. The preparation procedure and conditions of the ethylene polymer were shown in Table 3-1, and the properties of the ethylene polymer were shown in Table 3-2.

Example 3-5

It was basically the same as Example 3, but with the following changes:
the concentration of the polyethylene main catalyst was changed to 0.018 mmol/L, the polymerization solvent was a mixed alkane solvent composed of neopentane and isopentane according to the molar proportion of 0.5:1 and having a saturated vapor pressure at 20°C of 100.01 KPa. The used solvent for the cocatalyst was also the same mixed alkane solvent.

The ethylene polymer was called PE-3-5. The preparation procedure and conditions of the ethylene polymer were shown in Table 3-1, and the properties of the ethylene polymer were shown in Table 3-2.

Example 3-6

It was basically the same as Example 3, but with the following changes:
the concentration of the polyethylene main catalyst was changed to 0.018 mmol/L. The polymerization solvent was a mixed alkane solvent composed of isopentane and cyclopentane according to the molar proportion of 8:1 having a

saturated vapor pressure at 20°C of 72.02 KPa. The used solvent for the cocatalyst was also the same mixed alkane solvent.

The ethylene polymer was called PE-3-6. The preparation procedure and conditions of the ethylene polymer were shown in Table 3-1, and the properties of the ethylene polymer were shown in Table 3-2.

Comparative Example 3-1

It was basically the same as Example 3, but with the following changes:
the polymerization solvent was changed to a hexane solvent, the solvent for the cocatalyst was changed to a hexane solution, and the ethylene polymer was called CPE-3-1. The preparation procedure and conditions of the ethylene polymer were shown in Table 3-1, and the properties of the ethylene polymer were shown in Table 3-2.

Comparative Example 3-2

It was basically the same as Example 3-3, but with the following changes:
the polymerization solvent was changed to a hexane solvent, the solvent for the cocatalyst was changed to a hexane solution, and the ethylene polymer was called CPE-3-2. The preparation procedure and conditions of the ethylene polymer were shown in Table 3-1, and the properties of the ethylene polymer were shown in Table 3-2.

Comparative Example 3-3

It was basically the same as Example 3, but with the following changes:
No hydrogen gas was added, the molar ratio of the comonomer 1-hexene to ethylene was 1, the catalyst concentration was changed to 0.008 mmol/L.

The ethylene polymer was called CPE-3-3. The preparation procedure and conditions of the ethylene polymer were shown in Table 3-1, and the properties of the ethylene polymer were shown in Table 3-2. The polymer could not be shaped and severely stuck to the tank.

Comparative Example 3-4

It was basically the same as Comparative Example 1-4, but with the following changes: Hydrogen gas and the comonomer were not added, i.e., the molar ratio of hydrogen gas to ethylene was 0, the molar ratio of the comonomer to ethylene was 0, the polymerization time was 8 hours, the catalyst concentration was changed to 0.008 mmol/L.

The used polyethylene main catalyst was the Zeigler-Natta type catalyst CAT-3, and the ethylene polymer was called CPE-3-4. The preparation procedure and conditions of the ethylene polymer were shown in Table 3-1, and the properties of the ethylene polymer were shown in Table 3-2. The polymer had such a high molecular weight that Mw and Mn could not be determined with GPC, and could not be processed by extrusion.

Comparative Example 3-5

It was basically the same as Example 3, but with the following changes:
the molar ratio of hydrogen gas to ethylene was 30, no comonomer was added, i.e., the molar ratio of the comonomer to ethylene was 0, and the catalyst concentration was changed to 0.48 mmol/L.

The ethylene polymer was called CPE-3-5. The preparation procedure and conditions of the ethylene polymer were shown in Table 3-1, and the properties of the ethylene polymer were shown in Table 3-2. The polymer had a high melting index and an extremely low molecular weight, and could not be processed by extrusion into shape.

Comparative Example 3-6

It was basically the same as Example 3, but with the following changes:
the molar ratio of hydrogen gas to the comonomer was 0.05, the catalyst concentration was changed to 0.180 mmol/L.

The ethylene polymer was called CPE-3-6. The preparation procedure and conditions of the ethylene polymer were shown in Table 3-1, and the properties of the ethylene polymer were shown in Table 3-2. The polymer could not be shaped and severely stuck to the tank.

Comparative Example 3-7

It was basically the same as Example 3, but with the following changes:

the concentration of the polyethylene main catalyst was changed to 0.024 mmol/L, and the molar ratio of hydrogen gas to the comonomer was 40.

The ethylene polymer was called CPE-3-7. The preparation procedure and conditions of the ethylene polymer were shown in Table 3-1, and the properties of the ethylene polymer were shown in Table 3-2.

Assay

The ethylene polymers obtained in examples and comparative examples were subjected to the film-blowing tests that were conducted on the GÖTTFERT Xtrude 1400 film-blowing machine. The main screw diameter was 45mm, the length-to-diameter ratio was 25, the die head diameter was 80mm, and the die head gap was 0.8mm. Circular air cooling was used, and the cooling air temperature was controllable (the cooling air temperature was 20°C). The screw rotation speed of the extruder was 20 rpm, the blowing expansion ratio was 2.3, the pulling speed was 8m/min ± 0.5m/min, the cooling line height was 230mm-250mm, and the film thickness was 0.03mm±0.003mm. The electric currents of their respective main machines were measured (unit: A) and used as the processing indexes in the film-blowing tests.

Table 1-1. Summary of preparation processes and conditions for ethylene polymers

| No. | Polyethylene main catalyst | Concentration of polyethylene main catalyst (mmol/L) | Cocatalyst | Molar ratio of cocatalyst to catalyst 's active metal | Polymerization solvent | Comonomer | Agitation rotation speed (rpm) | Molar ratio of hydrogen gas to ethylene | Molar ratio of comonomer to ethylene | Molar ratio of hydrogen gas to comonomer | Polymerization pressure (MPa) | Polymerization temperature (°C) | Polymerization time (h) | Polymerization activity (kgPE/ gCat ) | Slurry concentration (gPE/L polymerization solvent) |
|---|---|---|---|---|---|---|---|---|---|---|---|---|---|---|---|
| Ex. 1 | CAT-1 | 0.014 | TEAL | 40 | n-pentane | 1-hexene | 300 | 0.62 | 0.03 | 20.67 | 1.8 | 85 | 2.0 | 13.8 | 221 |
| Ex. 1-1 | CAT-1 | 0.021 | TEAL | 50 | cyclopentane | 1-octene | 240 | 0.02 | 0.20 | 10.00 | 1.2 | 95 | 1.5 | 15.4 | 370 |
| Ex. 1-2 | CAT-1 | 0.028 | TEAL | 100 | isopentane | 1-hexene | 200 | 4.04 | 0.30 | 13.47 | 2.4 | 78 | 3.0 | 3.5 | 112 |
| Ex. 1-3 | CAT-1 | 0.014 | TIBA | 140 | neopentane | 1-butene | 40 | 2.30 | 0.15 | 15.33 | 3.6 | 62 | 1.0 | 21.7 | 434 |
| Ex. 1-4 | CAT-1 | 0.014 | TEAL | 40 | mixed alkane solvent having a saturated vapor pressure at 20°C of 66.6 KPa | 1-hexene | 300 | 0.62 | 0.03 | 20.67 | 1.8 | 85 | 2.0 | 12.4 | 397 |
| Ex. 1-5 | CAT-1 | 0.014 | TEAL | 40 | mixed alkane solvent having a saturated vapor pressure at 20°C of 100.01KPa | 1-hexene | 300 | 0.62 | 0.03 | 20.67 | 1.8 | 85 | 2.0 | 17.6 | 240 |
| Ex. 1-6 | CAT-1 | 0.014 | TEAL | 40 | mixed alkane solvent having a saturated vapor pressure at 20°C of 72.02KPa | 1-hexene | 300 | 0.62 | 0.03 | 20.67 | 1.8 | 85 | 2.0 | 15.4 | 235 |

(continued)

| No. | Polyethylene main catalyst | Concentration of polyethylene main catalyst (mmol/L) | Cocatalyst | Molar ratio of cocatalyst to catalyst's active metal | Polymerization solvent | Comonomer | Agitation rotation speed (rpm) | Molar ratio of hydrogen gas to ethylene | Molar ratio of comonomer to ethylene | Molar ratio of hydrogen gas to comonomer | Polymerization pressure (MPa) | Polymerization temperature (°C) | Polymerization time (h) | Polymerization activity (kgPE/gCat) | Slurry concentration (gPE/L polymerization solvent) |
|---|---|---|---|---|---|---|---|---|---|---|---|---|---|---|---|
| Comp. Ex. 1-1 | CAT-1 | 0.014 | TEAL | 40 | hexane | 1-hexene | 300 | 0.62 | 0.03 | 20.67 | 1.8 | 85 | 2.0 | 12.4 | 199 |
| Comp. Ex. 1-2 | CAT-1 | 0.014 | TIBA | 140 | hexane | 1-butene | 40 | 2.30 | 0.15 | 15.33 | 3.6 | 62 | 1.0 | 7.3 | 323 |
| Comp. Ex. 1-3 | CAT-1 | 0.007 | TEAL | 40 | n-pentane | 1-hexene | 300 | 0 | 1.00 | 0 | 1.8 | 85 | 2.0 | stuck to tank | - |
| Comp. Ex. 1-4 | CAT-1 | 0.007 | TEAL | 40 | n-pentane | - | 300 | 0 | 0 | - | 1.8 | 85 | 8.0 | 30.5 | 342 |
| Comp. Ex. 1-5 | CAT-1 | 0.180 | TEAL | 40 | n-pentane | - | 300 | 30 | 0 | - | 1.8 | 85 | 2.0 | 1.1 | 255 |
| Comp. Ex. 1-6 | CAT-1 | 0.180 | TEAL | 40 | n-pentane | 1-hexene | 300 | 0.62 | 12.40 | 0.05 | 1.8 | 85 | 2.0 | stuck to tank | - |
| Comp. Ex. 1-7 | CAT-1 | 0.014 | TEAL | 40 | n-pentane | 1-hexene | 300 | 0.62 | 0.0155 | 40 | 1.8 | 85 | 2.0 | 10.4 | 200 |

Table 2-1. Summary of preparation processes and conditions for ethylene polymers

| No. | Polyethylene main catalyst | Concentration of polyethylene main catalyst (mmol/L) | Cocatalyst | Molar ratio of cocatalyst to catalyst's active metal | Polymerization solvent | Comonomer | Agitation rotation speed (rpm) | Molar ratio of hydrogen gas to ethylene | Molar ratio of comonomer to ethylene | Molar ratio of hydrogen gas to comonomer | Polymerization pressure (MPa) | Polymerization temperature (°C) | Polymerization time (h) | Polymerization activity (kgPE/ gCat ) | Slurry concentration (gPE/L polymerization solvent) |
|---|---|---|---|---|---|---|---|---|---|---|---|---|---|---|---|
| Ex. 2 | CAT-2 | 0.005 | MAO | 40 | n-pentane | 1-hexene | 300 | 0.05 | 0.03 | 1.67 | 1.8 | 85 | 2.0 | 10.2 | 408 |
| Ex. 2-1 | CAT-2 | 0.005 | MAO | 50 | cyclopentane | 1-octene | 240 | 0.02 | 0.02 | 1.00 | 1.2 | 95 | 1.5 | 8.4 | 336 |
| Ex. 2-2 | CAT-2 | 0.015 | TIBA | 100 | isopentane | 1-hexene | 200 | 0.07 | 0.30 | 0.23 | 2.4 | 78 | 3.0 | 3.5 | 420 |
| Ex. 2-3 | CAT-2 | 0.005 | MAO | 140 | neopentane | 1-butene | 40 | 0.04 | 0.15 | 0.27 | 3.6 | 62 | 1.0 | 8.4 | 476 |
| Ex. 2-4 | CAT-2 | 0.005 | MAO | 40 | mixed alkane solvent having a saturated vapor pressure at 20°C of 55.93KPa | 1-hexene | 300 | 0.05 | 0.03 | 1.67 | 1.8 | 85 | 2.0 | 9.2 | 368 |
| Ex. 2-5 | CAT-2 | 0.005 | MAO | 40 | mixed alkane solvent having a saturated vapor pressure at 20°C of 100.01KPa | 1-hexene | 300 | 0.05 | 0.03 | 1.67 | 1.8 | 85 | 2.0 | 13.4 | 425 |
| Ex. 2-6 | CAT-2 | 0.005 | MAO | 40 | mixed alkane solvent having a saturated vapor pressure at 20°C of 72.02KPa | 1-hexene | 300 | 0.05 | 0.03 | 1.67 | 1.8 | 85 | 2.0 | 12.7 | 420 |

(continued)

| No. | Polyethylene main catalyst | Concentration of polyethylene main catalyst (mmol/L) | Cocatalyst | Molar ratio of cocatalyst to catalyst 's active metal | Polymerization solvent | Comonomer | Agitation rotation speed (rpm) | Molar ratio of hydrogen gas to ethylene | Molar ratio of comonomer to ethylene | Molar ratio of hydrogen gas to comonomer | Polymerization pressure (MPa) | Polymerization temperature (°C) | Polymerization time (h) | Polymerization activity (kgPE/ gCat ) | Slurry concentration (gPE/L polymerization solvent) |
|---|---|---|---|---|---|---|---|---|---|---|---|---|---|---|---|
| Comp. Ex. 2-1 | CAT-2 | 0.005 | MAO | 40 | hexane | 1-hexene | 300 | 0.05 | 0.03 | 1.67 | 1.8 | 85 | 2.0 | 8.8 | 352 |
| Comp. Ex. 2-2 | CAT-2 | 0.005 | MAO | 140 | hexane | 1-butene | 40 | 0.04 | 0.15 | 0.27 | 3.6 | 62 | 1.0 | 9.3 | 371 |
| Comp. Ex. 2-3 | CAT-2 | 0.005 | MAO | 40 | n-pentane | 1-hexene | 300 | 0 | 1.00 | 0 | 1.8 | 85 | 2.0 | stuck to tank | - |
| Comp. Ex. 2-4 | CAT-2 | 0.002 | TEAL | 40 | n-pentane | - | 300 | 0 | 0 | - | 1.8 | 85 | 8.0 | 18.5 | 350 |
| Comp. Ex. 2-5 | CAT-2 | 0.200 | MAO | 40 | n-pentane | - | 300 | 30 | 0 | - | 1.8 | 85 | 2.0 | 0.2 | 320 |
| Comp. Ex. 2-6 | CAT-2 | 0.200 | MAO | 40 | n-pentane | 1-hexene | 300 | 0.05 | 5.00 | 0.01 | 1.8 | 85 | 2.0 | stuck to tank | - |

Table 3-1. Summary of preparation processes and conditions for ethylene polymers

| No. | Polyethylene main catalyst | Concentration of polyethylene main catalyst (mmol/L ) | Cocatalyst | Molar ratio of cocatalyst to catalyst's active metal | Polymerization solvent | Comonomer | Agitation rotation speed (rpm) | Molar ratio of hydrogen gas to ethylene | Molar ratio of comonomer to ethylene | Molar ratio of hydrogen gas to comonomer | Polymerization pressure (MPa) | Polymerization temperature (°C) | Polymerization time (h) | Polymerization activity (kgPE/gCat) | Slurry concentration (gPE/L polymerization solvent) |
|---|---|---|---|---|---|---|---|---|---|---|---|---|---|---|---|
| Ex. 3 | CAT-3 | 0.024 | TEAL | 40 | n-pentane | 1-hexene | 300 | 0.62 | 0.03 | 20.67 | 1.8 | 85 | 2.0 | 35.8 | 439 |
| Ex. 3-1 | CAT-3 | 0.018 | TEAL | 50 | cyclopentane | 1-octene | 240 | 0.02 | 0.20 | 10.00 | 1.2 | 95 | 0.5 | 16.5 | 150 |
| Ex. 3-2 | CAT-3 | 0.048 | TEAL | 100 | isopentane | 1-hexene | 200 | 4.04 | 0.30 | 13.47 | 2.4 | 78 | 3.0 | 12.4 | 301 |
| Ex. 3-3 | CAT-3 | 0.012 | TIBA | 140 | neopentane | 1-butene | 40 | 2.30 | 0.15 | 15.33 | 3.6 | 62 | 1.0 | 70.4 | 426 |
| Ex. 3-4 | CAT-3 | 0.024 | TEAL | 40 | mixed alkane solvent having a saturated vapor pressure at 20°C of 100.01KPa | 1-hexene | 300 | 0.62 | 0.03 | 20.67 | 1.8 | 85 | 2.0 | 32.0 | 392 |
| Ex. 3-5 | CAT-3 | 0.018 | TEAL | 40 | mixed alkane solvent having a saturated vapor pressure at 20°C of 100.01KPa | 1-hexene | 300 | 0.62 | 0.03 | 20.67 | 1.8 | 85 | 2.0 | 42.3 | 410 |

(continued)

| No. | Polyethylene main catalyst | Concentration of polyethylene main catalyst (mmol/L ) | Cocatalyst | Molar ratio of cocatalyst to catalyst's active metal | Polymerization solvent | Comonomer | Agitation rotation speed (rpm) | Molar ratio of hydrogen gas to ethylene | Molar ratio of comonomer to ethylene | Molar ratio of hydrogen gas to comonomer | Polymerization pressure (MPa) | Polymerization temperature (°C) | Polymerization time (h) | Polymerization activity (kgPE/gCat) | Slurry concentration (gPE/L polymerization solvent) |
|---|---|---|---|---|---|---|---|---|---|---|---|---|---|---|---|
| Ex. 3-6 | CAT-3 | 0.018 | TEAL | 40 | mixed alkane solvent having a saturated vapor pressure at 20°C of 72.02KPa | 1-hexene | 300 | 0.62 | 0.03 | 20.67 | 1.8 | 85 | 2.0 | 40.5 | 402 |
| Comp. Ex. 3-1 | CAT-3 | 0.024 | TEAL | 40 | hexane | 1-hexene | 300 | 0.62 | 0.03 | 20.67 | 1.8 | 85 | 2.0 | 31.4 | 385 |
| Comp. Ex. 3-2 | CAT-3 | 0.012 | TIBA | 140 | hexane | 1-butene | 40 | 2.30 | 0.15 | 15.33 | 3.6 | 62 | 1.0 | 25.4 | 365 |
| Comp. Ex. 3-3 | CAT-3 | 0.008 | TEAL | 40 | n-pentane | 1-hexene | 300 | 0 | 1 | 0 | 1.8 | 85 | 2.0 | stuck to tank | - |
| Comp. Ex. 3-4 | CAT-3 | 0.008 | TEAL | 40 | n-pentane | - | 300 | 0 | 0 | - | 1.8 | 85 | 8.0 | 67.4 | 350 |
| Comp. Ex. 3-5 | CAT-3 | 0.480 | TEAL | 40 | n-pentane | - | 300 | 30 | 0 | - | 1.8 | 85 | 2.0 | 1.2 | 244 |
| Comp. Ex. 3-6 | CAT-3 | 0.180 | TEAL | 40 | n-pentane | 1-hexene | 300 | 0.62 | 12.4 | 0.05 | 1.8 | 85 | 2.0 | stuck to tank | - |
| Comp. Ex. 3-7 | CAT-3 | 0.024 | TEAL | 40 | n-pentane | 1-hexene | 300 | 0.62 | 0.0155 | 40 | 1.8 | 85 | 2.0 | 27.4 | 345 |

Table 1-2. Summary of properties of ethylene polymers

| No. | Ethylen e polymer No. | Solvent content in wet material (wt%) | Polyme r bulk den- sity (g/cm3) | True den- sity ($g/cm^3$ ) | Melting in- dex (g/ 10min) | Comonome r insertion rate (mol%) | MW ($\times 10^4$ g/mol) | Mn ($\times 10^4$ g/mol) | MW D | Meltin g point (°C) | Crystallinit y (%) | Average particle di- ameter ($\mu$m) | Electric current of main machine (A) |
|---|---|---|---|---|---|---|---|---|---|---|---|---|---|
| Ex. 1 | PE-1 | 16.9 | 0.33 | 0.9516 | 6.10 | 0.60 | 10.8 | 1.8 | 5.8 | 130.9 | 66 | 862.6 | 5.7 |
| Ex. 1-1 | PE-1-1 | 19.5 | 0.35 | 0.9635 | 0.29 | 0.20 | 25.9 | 5.9 | 4.4 | 135.3 | 79 | 850.2 | 6.0 |
| Ex. 1-2 | PE-1-2 | 17.2 | 0.38 | 0.9440 | 439.00 | 1.60 | 9.6 | 1.5 | 6.1 | 129.1 | 58 | 471.4 | 5.6 |
| Ex. 1-3 | PE-1-3 | 16.2 | 0.36 | 0.9488 | 55.47 | 0.90 | 7.9 | 1.2 | 6.8 | 131.5 | 68 | 562.8 | 5.4 |
| Ex. 1-4 | PE-1-4 | 17.4 | 0.33 | 0.9505 | 6.54 | 0.65 | 10.1 | 1.7 | 5.9 | 130.2 | 65 | 844.4 | 5.6 |
| Ex. 1-5 | PE-1-5 | 15.5 | 0.36 | 0.9514 | 6.32 | 0.69 | 10.2 | 1.8 | 5.6 | 130.5 | 65 | 870.2 | 5.5 |
| Ex. 1-6 | PE-1-6 | 16.2 | 0.36 | 0.9515 | 6.27 | 0.63 | 10.5 | 1.8 | 5.7 | 130.7 | 65 | 866.5 | 5.6 |
| Comp . Ex. 1-1 | CPE-1-1 | 26.3 | 0.33 | 0.9535 | 4.75 | 0.60 | 10.3 | 1.8 | 5.7 | 131.4 | 67 | 944.5 | 6.8 |
| Comp . Ex. 1-2 | CPE-1-2 | 24.7 | 0.32 | 0.9652 | 51.2 | 0.15 | 8.4 | 1.9 | 4.4 | 134.2 | 70 | 886.2 | 6.4 |
| Comp . Ex. 1-3 | CPE-1-3 | not measurabl e | stuck to tank | - | not measurabl e | 6.40 | not measurabl e | not measurabl e | - | 102.4 | 22 | not measurabl e | unprocessabl e |
| Comp . Ex. 1-4 | CPE-1-4 | 16.2 | 0.32 | 0.9317 | not measurabl e | - | not measurabl e | not measurabl e | - | 146.2 | 77 | 908.5 | unprocessabl e |
| Comp . Ex. 1-5 | CPE-1-5 | 16.3 | 0.32 | 0.9710 | 2700 | not detected | 0.2 | 0.03 | 6.7 | 122.4 | 92 | 184.0 | Extrusion too fast to be extruded into shape |
| Comp . Ex. 1-6 | CPE-1-6 | not measurabl e | stuck to tank | - | not measurabl e | 9.7 | not measurabl e | not measurabl e | - | 104.4 | 16 | not measurabl e | unprocessabl e |
| Comp . Ex. 1-7 | CPE-1-7 | 16.5 | 0.32 | 0.9725 | 5.42 | 0.02 | 11.3 | 1.88 | 6.0 | 132.2 | 94 | 747.3 | 6.2 |

Table 2-2. Summary of properties of ethylene polymers

| No. | Ethylen e polymer No. | Solvent content in wet material (wt%) | Polyme r bulk den-sity ($g/cm^3$) | True den-sity ($g/cm^3$) ) | Melting in-dex (g/ 10min) | Comonome r insertion rate (mol%) | MW ($\times 10^4$ g/mol) | Mn ($\times 10^4$ g/mol) | MW D | Meltin g point (°C) | Crystallinit y (%) | Average particle di-ameter (μm) | Electric current of main machine (A) |
|---|---|---|---|---|---|---|---|---|---|---|---|---|---|
| Ex. 2 | PE-2 | 16.5 | 0.36 | 0.9445 | 14.18 | 0.80 | 10.0 | 4.5 | 2.2 | 122.1 | 60 | 952.3 | 5.6 |
| Ex. 2-1 | PE-2-1 | 19.3 | 0.39 | 0.9562 | 0.67 | 0.30 | 23.9 | 12.6 | 1.9 | 126.3 | 72 | 912.4 | 5.9 |
| Ex. 2-2 | PE-2-2 | 17.0 | 0.42 | 0.9325 | 1020.24 | 2.20 | 8.9 | 3.9 | 2.3 | 119.2 | 52 | 754.7 | 5.1 |
| Ex. 2-3 | PE-2-3 | 16.4 | 0.44 | 0.9372 | 128.91 | 1.20 | 7.3 | 3.0 | 2.4 | 126.4 | 63 | 782.1 | 5.3 |
| Ex. 2-4 | PE-2-4 | 17.1 | 0.37 | 0.9434 | 15.20 | 0.90 | 9.3 | 4.1 | 2.3 | 123.4 | 54 | 905.1 | 5.6 |
| Ex. 2-5 | PE-2-5 | 16.0 | 0.40 | 0.9440 | 14.72 | 0.85 | 9.8 | 4.7 | 2.1 | 121.5 | 58 | 964.3 | 5.2 |
| Ex. 2-6 | PE-2-6 | 16.2 | 0.38 | 0.9442 | 14.35 | 0.82 | 9.9 | 4.7 | 2.1 | 121.9 | 59 | 960.2 | 5.4 |
| Comp . Ex. 2-1 | CPE-2-1 | 25.4 | 0.33 | 0.9458 | 12.33 | 0.80 | 9.9 | 4.5 | 2.2 | 124.8 | 62 | 981.6 | 7.2 |
| Comp . Ex. 2-2 | CPE-2-2 | 25.0 | 0.33 | 0.9603 | 10.71 | 0.26 | 10.4 | 4.52 | 2.3 | 122.7 | 61 | 993.2 | 7.1 |
| Comp . Ex. 2-3 | CPE-2-3 | not measurabl e | stuck to tank | 0.9037 | not measurabl e | 9.2 | not measurabl e | not measurabl e | - | 98.4 | 15 | not measurabl e | unprocessabl e |
| Comp . Ex. 2-4 | CPE-2-4 | 16.1 | 0.35 | 0.9622 | not measurabl e | - | not measurabl e | not measurabl e | - | 142.8 | 71 | 988.2 | unprocessabl e |
| Comp . Ex. 2-5 | CPE-2-5 | 15.6 | 0.34 | 0.9645 | 3750 | not detected | 0.1 | 4.0 | 2.5 | 125.1 | 89 | 924.5 | Extrusion too fast to be extruded into shape |
| Comp . Ex. 2-6 | CPE-2-6 | not measurabl e | stuck to tank | 0.8954 | not measurabl e | 11.4 | not measurabl e | not measurabl e | - | 114.7 | 9 | not measurabl e | unprocessabl e |

Table 3-2. Summary of properties of ethylene polymers

| No. | Ethylen e polymer No. | Solvent content in wet material (wt%) | Polyme r bulk den- sity (g/cm3) | True den- sity ($g/cm^3$) | Melting in- dex (g/ 10min) | Comonome r insertion rate (mol%) | MW ($\times 10^4$ g/mol) | Mn ($\times 10^4$ g/mol) | MW D | Meltin g point (°C) | Crystallinit y (%) | Average particle di- ameter (μm) | Electric current of main machine (A) |
|---|---|---|---|---|---|---|---|---|---|---|---|---|---|
| Ex. 3 | PE-3 | 16.8 | 0.33 | 0.9516 | 6.75 | 0.50 | 10.5 | 1.7 | 6.2 | 131.5 | 68 | 175.4 | 5.7 |
| Ex. 3-1 | PE-3-1 | 19.6 | 0.35 | 0.9635 | 0.29 | 0.20 | 25.9 | 5.9 | 4.4 | 135.3 | 79 | 157.3 | 5.8 |
| Ex. 3-2 | PE-3-2 | 17.7 | 0.38 | 0.9440 | 439.00 | 1.60 | 9.6 | 1.5 | 6.1 | 129.1 | 58 | 169.9 | 5.3 |
| Ex. 3-3 | PE-3-3 | 16.2 | 0.36 | 0.9488 | 55.47 | 0.90 | 7.9 | 1.2 | 6.8 | 131.5 | 68 | 183.5 | 5.3 |
| Ex. 3-4 | PE-3-4 | 17.8 | 0.33 | 0.9505 | 6.54 | 0.65 | 10.1 | 1.7 | 5.9 | 130.2 | 65 | 170.0 | 5.4 |
| Ex. 3-5 | PE-3-5 | 15.4 | 0.36 | 0.9510 | 6.92 | 0.54 | 10.2 | 1.76 | 5.8 | 130.9 | 66 | 182.5 | 5.5 |
| Ex. 3-6 | PE-3-6 | 15.7 | 0.36 | 0.9512 | 6.87 | 0.52 | 10.3 | 1.72 | 6.0 | 131.2 | 67 | 180.3 | 5.6 |
| Comp . Ex. 3-1 | CPE-3-1 | 26.0 | 0.33 | 0.9562 | 5.62 | 0.50 | 10.2 | 1.7 | 6.0 | 132.2 | 69 | 170.4 | 6.6 |
| Comp . Ex. 3-2 | CPE-3-2 | 25.3 | 0.33 | 0.9614 | 44.7 | 0.14 | 11.9 | 1.89 | 6.3 | 134.8 | 67 | 162.5 | 6.3 |
| Comp . Ex. 3-3 | CPE-3-3 | not measurabl e | stuck to tank | 0.9182 | not measurabl e | 7.3 | not measurabl e | not measurabl e | - | 101.8 | 21 | - | unprocessabl e |
| Comp . Ex. 3-4 | CPE-3-4 | 16.4 | 0.32 | 0.9350 | not measurabl e | - | not measurabl e | not measurabl e | - | 147.5 | 74 | 161.5 | unprocessabl e |
| Comp . Ex. 3-5 | CPE-3-5 | 16.2 | 0.32 | 0.9681 | 1009 | not detected | 2.3 | 0.34 | 6.7 | 126.3 | 90 | 174.2 | Extrusion too fast to be extruded into shape |
| Comp . Ex. 3-6 | CPE-3-6 | not measurabl e | stuck to tank | not - | not measurabl e | 8.4 | not measurabl e | not measurabl e | - | 101.5 | 14 | not measurabl e | unprocessabl e |
| Comp . Ex. 3-7 | CPE-3-7 | 16.3 | 0.32 | 0.9712 | 5.52 | 0.01 | 13.5 | 2.07 | 6.5 | 134.4 | 75 | 168.2 | 6.5 |

From the comparison of the results obtained from Example 1 and Comparative Examples 1-5, Example 2 and Comparative Examples 2-5, Example 3 and Comparative Examples 3-5 in the above tables, it can be seen that the copolymerization effects of the catalysts were significant, that is, the catalysts had higher copolymerization activity than homopolymerization activity; the copolymerization reactions could increase the bulk density of the polymer, that is, improve the particle morphology of the polymer, and reduce the true density, melting point, and crystallinity of the polymer; and the high-density polyethylene obtained by the present invention had excellent processing performance.

From the comparison of the results obtained from Example 1, Example 1-3 and Comparative Example 1-1, Comparative Example 1-2; Example 2, Example 2-3 and Comparative Example 2-1, Comparative Example 2-2; Example 3, Example 3-3 and Comparative Example 3-1, Comparative Example 3-2 in the above tables, it can be seen that using the ethylene slurry polymerization process of the present invention, it was very easy to dry the ethylene polymer powder obtained after the polymerization. After the polymerization reaction was completed, the product was directly filtered, the residual solvent content in the wet polymer was less than 20wt%, which was lower than the residual solvent content of higher than 25wt% in the wet polymer obtained by using hexane as the polymerization solvent, which was very conducive to shortening the drying time of the polyethylene material and saving the cost of the polyethylene post-treatment.

By comparing examples and comparative examples in the above tables, it can be seen that the polyethylene obtained by the ethylene slurry polymerization process of the present invention had a moderate processing index in the film-blowing test and exhibited excellent processing performance. This indicated that the ethylene polymer obtained by the process of the present invention had excellent processing performance, which was very conducive to the subsequent processing applications. Under the same conditions, it could further reduce the processing cost, or at the same electric current of the main machine, it could further improve the processing efficiency of the polyethylene.

From the data and effects obtained in the above tables, it can be seen that the ethylene polymer provided by the present invention had a high bulk density, wide and adjustable and controllable ranges of true density, melting index, crystallinity, melting point, comonomer molar insertion rate, weight-average molecular weight and the like, and a moderate and adjustable and controllable molecular weight distribution. The performance of ethylene polymers could be adjusted and controlled by simply and flexibly changing the polymerization process parameters such as the polyethylene main catalyst, the proportion of the polyethylene main catalyst and the cocatalyst, the molar ratio of hydrogen gas to ethylene, the molar ratio of the comonomer to ethylene, the polymerization pressure, the polymerization temperature and the polymerization time. The obtained high-density polyethylene showed excellent processing performance and was very suitable for the technical production and application of the ethylene slurry polymerization.

Although the embodiments of the present invention have been described in detail with reference to the examples, it should be noted that the scope of the present invention is not limited by the embodiments, but is defined by the appended claims. Those skilled in the art can appropriately modify the embodiments without departing from the technical spirit and scope of the present invention, and it is obvious that the modified embodiments are also included in the scope of the present invention.

## Claims

1. A process for preparing a high-density ethylene polymer, wherein the true density of the ethylene polymer is 0.930-0.980 g/cm$^3$, preferably 0.940-0.970 g/cm$^3$, more preferably 0.942-0.970 g/cm$^3$, wherein raw materials containing ethylene, hydrogen gas and a comonomer are subjected to a tank slurry polymerization with an alkane solvent having a boiling point of 5-55°C or a mixed alkane solvent having a saturated vapor pressure of 20-150KPa at 20°C as the polymerization solvent in the presence of a polyethylene catalytic system, at the molar ratio of hydrogen gas to ethylene of 0.01-20:1, preferably 0.015-10:1, at the molar ratio of hydrogen gas to the comonomer of 0.1-30:1, preferably 0.15-25:1, said comonomer is selected from $C_3$-$C_{10}$ alpha-olefins,
the polyethylene catalytic system comprises a polyethylene main catalyst selected from at least one of non-metallocene catalysts, metallocene catalysts, and Ziegler-type catalysts.

2. The process for preparing ethylene polymer according to claim 1, wherein the polymerization temperature is 30-110°C, preferably 50-100°C, the polymerization pressure is 0.2-4.0 MPa, preferably 1.0-3.8 MPa, the molar ratio of the comonomer to ethylene is 0.01-0.500:1, preferably 0.015-0.350:1.

3. The process for preparing ethylene polymer according to claim 1 or 2, which is **characterized in that** the proportion of the polyethylene main catalyst and the polymerization solvent is 0.001-0.500 mmol of the polyethylene main catalyst/L of the polymerization solvent, preferably 0.005-0.200 mmol of the polyethylene main catalyst/L of the polymerization solvent, the slurry concentration is 50-500 g of the polymer/L of the polymerization solvent, preferably 100-400 g of the polymer/L of the polymerization solvent, the tank-type slurry polymerization is performed in batch or continuously, and the solvent content in the powder material obtained after flash evaporation, filtering, or centrifugal

separation of the slurry is less than 20wt%.

4. The process for preparing ethylene polymer according to any of claims 1-3, which is **characterized in that** the polymerization solvent is selected from an alkane solvent having a boiling point of 5-55°C or a mixed alkane solvent having a saturated vapor pressure at 20°C of 20-150KPa (preferably 40-110KPa), preferably said solvent is one selected from n-pentane, isopentane, neopentane, and cyclopentane, or a mixed alkane solvent having a saturated vapor pressure at 20°C of 20-150KPa (preferably 40-110KPa) formed by mixing two or more of alkanes selected from n-pentane, isopentane, neopentane and cyclopentane, preferably one of combinations selected from a combination of n-pentane and isopentane, a combination of isopentane and neopentane, a combination of n-pentane and cyclopentane, a combination of n-pentane and neopentane, a combination of isopentane and cyclopentane, a combination of neopentane and cyclopentane, a combination of n-hexane and n-pentane and a combination of n-pentane-isopentane-cyclopentane.

5. The process for preparing ethylene polymer according to any of claims 1-4, which is **characterized in that** the polyethylene main catalyst is selected from a supported non-metallocene catalyst, a supported metallocene catalyst, a Ziegler-type catalyst, a Ziegler-Natta type catalyst, or a mixture of these catalysts, the polyethylene catalytic system contain a cocatalyst, the cocatalyst is selected from an aluminoxane, an alkylaluminum, a haloalkylaluminum, a fluoroborane, an alkyl borane or an alkyl ammonium borate or a mixture of two or more thereof, preferably selected from an aluminoxane, such as a methylaluminoxane, an ethylaluminoxane or a modified methylaluminoxane, an alkyl aluminum, such as a trimethylaluminum, a triethylaluminum, a triisobutylaluminum, a tri-n-hexylaluminum, a haloalkylaluminum, such as monochlorodiethylaluminum, dichloroethylaluminum, most preferably selected from an alkyl aluminum, such as triethylaluminum, triisobutylaluminum,

wherein, in case of using the non-metallocene catalyst as the main catalyst, the molar ratio of hydrogen gas to the comonomer is 8-30:1, preferably 10-25: 1, more preferably 12-23:1, the molar ratio of hydrogen gas to ethylene is 0.01-20:1, preferably 0.015-10:1, further preferably, 0.02-5:1;
in case of using the metallocene catalyst as the main catalyst, the molar ratio of hydrogen gas to the comonomer is 0.1-5:1, preferably 0.15-3:1, more preferably 0.2-2:1, the molar ratio of hydrogen gas to ethylene is 0.01-0.15:1, preferably 0.015-0.1:1, further preferably, 0.02-0.08:1;
in case of using the Ziegler-Natta catalyst as the main catalyst, the molar ratio of hydrogen gas to the comonomer is 8-30:1, preferably 10-25:1, more preferably 12-23:1, the molar ratio of hydrogen gas to ethylene is 0.01-20:1, preferably 0.015-10:1, further preferably, 0.02-5:1.

6. The process for preparing ethylene polymer according to any of claims 1-5, which is **characterized in that** the polyethylene main catalyst is selected from a supported non-metallocene catalyst and a Ziegler-Natta type catalyst, the active metal element of which is selected from Group IVB metal elements, preferably metal elements titanium and zirconium.

7. The process for preparing the ethylene polymer according to any of claims 5-6, which is **characterized in that** as the total aluminum element in the aluminoxane, the alkyl aluminum, or the haloalkyl aluminum in the cocatalyst and the active metal element in the polyethylene main catalyst meter, the molar ratio of aluminum to the active metal is 10-500:1, as the boron element in the fluoroborane, the alkyl borane or the alkyl ammonium borate in the cocatalyst and the active metal element in the polyethylene main catalyst, the molar ratio of the boron to the active metal is 1-50:1, as the total aluminum element in the aluminoxane, the alkyl aluminum, or the haloalkyl aluminum in the cocatalyst, the boron element in the fluoroborane, the alkyl borane or the alkyl ammonium borate and the active metal element in the polyethylene main catalyst, the molar ratio of the aluminum:the boron:the active metal is 10-100:1-20:1.

8. The process for preparing the ethylene polymer according to claim 7, which is **characterized in that** as the total aluminum element in the aluminoxane, the alkyl aluminum, or the haloalkyl aluminum in the cocatalyst and the active metal element in the polyethylene main catalyst meter, the molar ratio of the aluminum to the active metal is 20-100:1, as the boron element in the fluoroborane, the alkyl borane or the alkyl ammonium borate in the cocatalyst and the active metal element in the polyethylene main catalyst, the molar ratio of the boron to the active metal is 1-20:1, as the total aluminum element in the aluminoxane, the alkyl aluminum, or the haloalkyl aluminum in the cocatalyst, the boron element in the fluoroborane, the alkyl borane or the alkyl ammonium borate and the active metal element in the polyethylene main catalyst, the molar ratio of the aluminum The boron:the active metal is 20-50:1-10:1.

9. The process for preparing the ethylene polymer according to any of claims 1-8, which is **characterized in that** said

comonomer is selected from $C_3$-$C_{10}$ alpha-olefins, such as one or more of propylene, 1-butene, 1-hexene, and 1-octene, preferably selected from one or more of 1-butene and 1-hexene.

**10.** A high-density ethylene polymer, which is **characterized in that** the ethylene polymer has a true density of 0.930-0.980 g/cm$^3$, preferably 0.940-0.970 g/cm$^3$, more preferably 0.942-0.970 g/cm$^3$, a weight-average molecular weight of 2 $\times 10^4$ g/mol - 40 $\times 10^4$ g/mol, preferably 5 $\times$ $10^4$ g/mol - 30 $\times 10^4$ g/mol, a molecular weight distribution of 1.8-10, preferably 2.0-8.0, a comonomer molar insertion rate of 0.01-5 mol%, preferably 0.05-2.5 mol%, and a processing index in the film-blowing test of 4.0-6.0, preferably 4.5-5.9.

**11.** The ethylene polymer according to claim 10, which is **characterized in that** the ethylene polymer has a melt index at a load of 2.16Kg at 190°C of 0.01-2500 g/lOmin, preferably 0.1-2000 g/lOmin, a bulk density of 0.28-0.55 g/cm$^3$, preferably 0.32-0.50 g/cm$^3$, and the ethylene polymer has an average particle size of 50-3000 $\mu$m, preferably 100-1000 $\mu$m, a crystallinity of 30-90%, preferably 40-80%, and a melting point of 105-147°C, preferably 110-143°C.

**12.** The ethylene polymer according to claim 10 or 11, wherein said comonomer is selected from $C_3$-$C_{10}$ alpha-olefins, such as one or more of propylene, 1-butene, 1-hexene, and 1-octene, preferably selected from one or more of 1-butene and 1-hexene.

**INTERNATIONAL SEARCH REPORT**

International application No.
**PCT/CN2022/074017**

**A. CLASSIFICATION OF SUBJECT MATTER**

C08F 2/01(2006.01)i；C08F 4/646(2006.01)i；C08F 210/16(2006.01)i

According to International Patent Classification (IPC) or to both national classification and IPC

**B. FIELDS SEARCHED**

Minimum documentation searched (classification system followed by classification symbols)

C08F

Documentation searched other than minimum documentation to the extent that such documents are included in the fields searched

Electronic data base consulted during the international search (name of data base and, where practicable, search terms used)

VCN, VEN, ISI WEB OF SCIENCE, CNKI: 高密度聚乙烯, 淤浆, 釜, 乙烯, 聚乙烯, HDPE, ethylene, polyethylene, PE, slurry, kettle, autoclave

**C. DOCUMENTS CONSIDERED TO BE RELEVANT**

| Category* | Citation of document, with indication, where appropriate, of the relevant passages | Relevant to claim No. |
|---|---|---|
| X | CN 105017455 A (SINOPEC YANGZI PETROCHEMICAL CO., LTD.; CHINA PETROLEUM & CHEMICAL CORPORATION) 04 November 2015 (2015-11-04) description, pp 2-45 | 1-12 |
| X | CN 105017456 A (SINOPEC YANGZI PETROCHEMICAL CO., LTD.; CHINA PETROLEUM & CHEMICAL CORPORATION) 04 November 2015 (2015-11-04) description, pp. 2-45 | 1-12 |
| X | WO 2013052273 A2 (EXXONMOBIL CHEMICAL PATENTS INC. et al.) 11 April 2013 (2013-04-11) description, pp. 22-25 | 1-12 |
| X | US 4447587 A (HOECHST AKTIENGESELLSCHAFT) 08 May 1984 (1984-05-08) description, pp. 2-5 | 1-12 |
| X | EP 0206794 A1 (EXXON CHEMICAL PATENTS INC) 30 December 1986 (1986-12-30) description, pp. 4-15 | 1-12 |
| X | US 2019169325 A1 (HANWHA CHEMICAL CORP) 06 June 2019 (2019-06-06) description, pp. 4-14 | 1-12 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 April 2022** | **05 May 2022** |
| Name and mailing address of the ISA/CN<br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

INTERNATIONAL SEARCH REPORT

International application No.
PCT/CN2022/074017

C. DOCUMENTS CONSIDERED TO BE RELEVANT

| Category* | Citation of document, with indication, where appropriate, of the relevant passages | Relevant to claim No. |
|---|---|---|
| X | CN 102453146 A (CHINA PETROLEUM & CHEMICAL CORPORATION; BEIJING CHEMICAL INSTITUTE, CHINA PETROLEUM & CHEMICAL CORPORATION) 16 May 2012 (2012-05-16)<br>description, pp. 3-7 | 1-12 |
| X | CN 105017457 A (SINOPEC YANGZI PETROCHEMICAL CO., LTD.; CHINA PETROLEUM & CHEMICAL CORPORATION) 04 November 2015 (2015-11-04)<br>description, pp. 2-45 | 1-12 |
| X | CN 105017626 A (SINOPEC YANGZI PETROCHEMICAL CO., LTD.; CHINA PETROLEUM & CHEMICAL CORPORATION) 04 November 2015 (2015-11-04)<br>description, pp. 8-48 | 1-12 |
| X | CN 105001360 A (SINOPEC YANGZI PETROCHEMICAL CO., LTD.; CHINA PETROLEUM & CHEMICAL CORPORATION) 28 October 2015 (2015-10-28)<br>description, pp. 8-48 | 1-12 |
| X | CN 105017625 A (SINOPEC YANGZI PETROCHEMICAL CO., LTD.; CHINA PETROLEUM & CHEMICAL CORPORATION) 04 November 2015 (2015-11-04)<br>description, pp. 8-48 | 1-12 |
| X | CN 101550210 A (SINOPEC YANGZI PETROCHEMICAL CO., LTD.) 07 October 2009 (2009-10-07)<br>description, pp. 2-5 | 1-12 |
| X | CN 105017459 A (SINOPEC YANGZI PETROCHEMICAL CO., LTD.; CHINA PETROLEUM & CHEMICAL CORPORATION) 04 November 2015 (2015-11-04)<br>description, pp. 2-45 | 1-12 |
| X | CN 105017458 A (SINOPEC YANGZI PETROCHEMICAL CO., LTD.; CHINA PETROLEUM & CHEMICAL CORPORATION) 04 November 2015 (2015-11-04)<br>description, pp. 2-45 | 1-12 |
| A | 宁英男 (NING, Yingnan). "釜式淤浆法生产高密度聚乙烯工艺及催化剂研究进展 (Progress in Technology and Catalysts for Kettle-Type Slurry HDPE Process)"<br>*化工进展 (Chemical Industry and Engineering Progress),* 31 December 2010 (2010-12-31),<br>entire document | 1-12 |
| A | 李德展 (LI, Dezhan). "茂金属催化剂淤浆聚合制备高密度聚乙烯 (Preparation of High Density Polyethylene by Slurry Polymerization with Metallocene Catalyst)"<br>*石油化工 (Petrochemical Technology),* 31 December 2016 (2016-12-31),<br>entire document | 1-12 |
| A | 张兰 (ZHANG, Lan). "釜式淤浆法HDPE 产品质量控制 (Quality Control of HDPE Product with Slurry in Stir Tank Reactor)"<br>*石化技术 (Petrochemical Industry Technology),* 31 December 2013 (2013-12-31),<br>entire document | 1-12 |
| A | 张兰 (ZHANG, Lan). "釜式淤浆法HDPE产品开发现状及展望 (Status and Forecast of Kettle-Type Slurry HDPE Product Development)"<br>*现代塑料加工应用 (Modern Plastics Processing and Applications),*<br>31 December 2011 (2011-12-31),<br>entire document | 1-12 |
| A | WANG, Dengfei,. "Progress in Technology and Catalysts for Continuous Stirred Tank Reactor Type Slurry Phase Polyethylene Processes"<br>*PETROLEUM CHEMISTRY,* 31 December 2018 (2018-12-31),<br>entire document | 1-12 |

Form PCT/ISA/210 (second sheet) (January 2015)

**INTERNATIONAL SEARCH REPORT**
**Information on patent family members**

International application No.
**PCT/CN2022/074017**

| Patent document cited in search report | | | Publication date (day/month/year) | Patent family member(s) | | | Publication date (day/month/year) |
|---|---|---|---|---|---|---|---|
| CN | 105017455 | A | 04 November 2015 | None | | | |
| CN | 105017456 | A | 04 November 2015 | None | | | |
| WO | 2013052273 | A2 | 11 April 2013 | None | | | |
| US | 4447587 | A | 08 May 1984 | IN | 157122 | B | 18 January 1986 |
| | | | | CA | 1207498 | A | 08 July 1986 |
| | | | | EP | 0068257 | A1 | 05 January 1983 |
| | | | | IN | 157122 | A1 | 18 January 1986 |
| | | | | ES | 513076 | A0 | 01 March 1983 |
| | | | | AR | 244715 | A1 | 30 November 1993 |
| | | | | JP | S582306 | A | 07 January 1983 |
| | | | | BR | 8203592 | A | 14 June 1983 |
| | | | | DE | 3124223 | A1 | 30 December 1982 |
| | | | | AU | 8499382 | A | 06 January 1983 |
| | | | | ZA | 824319 | B | 27 April 1983 |
| | | | | DE | 3263246 | D1 | 30 May 1985 |
| | | | | ZA | 8204319 | B | 27 April 1983 |
| EP | 0206794 | A1 | 30 December 1986 | JP | S61296008 | A | 26 December 1986 |
| | | | | AU | 5891486 | A | 24 December 1986 |
| | | | | AU | 7007991 | A | 11 April 1991 |
| | | | | CA | 1268754 | A | 08 May 1990 |
| | | | | AR | 240463 | A1 | 30 April 1990 |
| | | | | DE | 3689244 | D1 | 09 December 1993 |
| US | 2019169325 | A1 | 06 June 2019 | CN | 109563198 | A | 02 April 2019 |
| | | | | KR | 101706073 | B1 | 13 February 2017 |
| | | | | EP | 3466990 | A1 | 10 April 2019 |
| | | | | JP | 2019517616 | A | 24 June 2019 |
| | | | | WO | 2017209372 | A1 | 07 December 2017 |
| CN | 102453146 | A | 16 May 2012 | None | | | |
| CN | 105017457 | A | 04 November 2015 | None | | | |
| CN | 105017626 | A | 04 November 2015 | None | | | |
| CN | 105001360 | A | 28 October 2015 | None | | | |
| CN | 105017625 | A | 04 November 2015 | None | | | |
| CN | 101550210 | A | 07 October 2009 | None | | | |
| CN | 105017459 | A | 04 November 2015 | None | | | |
| CN | 105017458 | A | 04 November 2015 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 200310106156X
- CN 200310106157
- CN 200410066068
- CN 200510119401X
- CN 200610107651
- CN 200710162677
- CN 200710162667
- CN 200710162672
- CN 200710162675
- CN 200710162676
- CN 200710162666
- CN 200910180100
- CN 200910180607
- CN 200910180601
- CN 200910180606
- CN 200910180602
- CN 200910180605
- CN 200910180603
- CN 200910180604
- CN 200910210988
- CN 200910210984
- CN 200910210989
- CN 200910210986
- CN 200910210985X
- CN 200910210990
- CN 200910210987
- CN 200910210991
- CN 201010286008
- CN 201010286012
- CN 201010284870
- CN 201010285982
- CN 201010284856
- CN 201010285970
- CN 201010285956
- CN 201010285969X
- CN 201010285958
- CN 201010285967
- CN 201010285994
- CN 201110259336
- CN 201110259219X
- CN 201110259330
- CN 201110259327
- CN 201110259367
- CN 201110259289
- CN 201110259359
- CN 201110259282
- CN 201110259318
- CN 201110259258X
- CN 201110259300
- CN 201110259254
- CN 001110259299
- CN 201110259245
- CN 201110259296
- CN 201110259338
- CN 201110259370
- CN 201110259339X
- CN 201110259293
- CN 201110259356
- CN 201210063756
- CN 201210063777
- CN 201210063788
- CN 201210063818
- CN 201210063824
- CN 201210063843
- CN 201210063854
- CN 201210063876
- CN 201210063878
- CN 201210063891
- CN 201210063894X
- CN 201210063907
- CN 201210063909
- CN 201210063935
- CN 201210063941
- CN 201210063945
- CN 201310189677X
- CN 201310227368
- CN 201310227370
- CN 201310227830
- CN 201310227393
- CN 201310452714
- CN 201710814678
- CN 201710814595
- CN 201710814594
- CN 201710814593
- CN 201710814592
- CN 201710814591X
- CN 201811144599
- CN 201811144768
- CN 201811139936
- CN 201811140811
- CN 201811139946
- CN 201811139741
- CN 201310091208
- WO 03010207 A
- CN ZL01126323
- CN ZL02110844
- CN 201110247347
- CN 201110080343X

- CN 201010518904
- CN 201010519660
- CN 201210289014
- CN 200910078596
- CN 201310090758
- CN 201310090736
- CN 201310521768
- CN 201410589467
- CN 201410590067
- CN 201610835700
- CN 201610944191
- CN 201710959423X
- CN 201110247349
- CN 201110080294X
- CN 201110080395
- CN 201210289017
- CN 201210289031
- CN 201310091192
- CN 201310540973X
- CN 201510724626
- CN 200410086283
- CN 200610137777
- CN 201610944182
- CN 201710312720
- CN 201110080422
- CN 201110080394
- CN 201010519406
- CN 201010519715X
- CN 201010519174
- CN 201010519429
- CN 201210289004
- CN 201310090847
- CN 201310091209
- CN 201310540975
- CN 201410554709
- CN 201410513506
- CN 00130388
- CN 200710176589
- CN 201610944083
- CN 201110246705
- CN 201110247085X
- CN 2011102914899
- CN 201010521674
- CN 201310090752
- CN 201310090848
- CN 2013100908483
- CN 201510624502
- CN 201710166709
- CN 20171031225
- CN 201110246710
- CN 201110080374
- CN 201010519797
- CN 201210289012
- CN 201210418645
- CN 201310090998
- CN 201410252254
- CN 201610393399
- CN 201610956141X
- CN 201710958837
- CN 201010522112
- CN 201010240355X
- CN 201010502803
- CN 201010511310
- CN 200710121105
- CN 201010502778
- CN 201010502717
- CN 201010240379
- CN 201110148492
- CN 201110148493X
- CN 201110148527
- CN 201110148545
- CN 201110306102
- CN 201010240378
- CN 200410086382
- CN 98101108X
- CN 200410078280
- CN 200910088546
- CN ZL200710162677
- CN ZL201010521674
- CN ZL201010240378